# FASCICULE DE BREVET EUROPEEN

(11) **EP 2 449 559 B1**
(45) Date de publication et mention de la délivrance du brevet: **12.11.2014**
(21) Numéro de dépôt: 10730752.2
(22) Date de dépôt: 29.06.2010
(51) Int. Cl.: G21C 19/46, C01G 43/025, C01G 56/00

(54) **PROCEDE AMELIORE DE TRAITEMENT DE COMBUSTIBLES NUCLEAIRES USES**
VERBESSERTES VERFAHREN ZUM BEHANDELN VON ABGEBRANNTEM KERNBRENNSTOFF
IMPROVED PROCESS FOR TREATING IRRADIATED NUCLEAR FUEL

(30) Priorité: 02.07.2009 FR 0954532
(43) Date de publication de la demande: 09.05.2012
(73) Titulaire: Areva NC, 75009 Paris (FR); Commissariat à l'Énergie Atomique et aux Énergies Alternatives, 75015 Paris (FR)
(72) Inventeur: EMIN, Jean-Luc, 78280 Guyancourt (FR); DRAIN, François, F-78860 Saint Nom La Breteche (FR); PONCELET, François, F-78110 Le Vesinet (FR); DINH, Binh, F-30130 Pont Saint Esprit (FR); PRADEL, Philippe, F-75016 Paris (FR); BARON, Pascal, F-30200 Bagnols Sur Ceze (FR); MASSON, Michel, F-84000 Avignon (FR)
(74) Mandataire: Ilgart, Jean-Christophe
(86) Numéro de dépôt international: PCT/EP2010/059232
(87) Numéro de publication internationale: WO 2011/000844

(56) Documents cités:
- WO-A1-2007/135178
- FR-A1- 2 870 841
- US-A- 4 278 559

## Description

### DOMAINE TECHNIQUE

La présente invention se rapporte à un procédé de traitement de combustibles nucléaires usés qui présente, entre autres avantages, celui d'éviter que soit entreposé, sur le site où sont traités ces combustibles, du plutonium purifié (c'est-à-dire totalement décontaminé vis-à-vis des produits de fission), même mélangé à de l'uranium ou à de l'uranium et du neptunium.

Ce procédé trouve notamment application dans le traitement de combustibles d'oxyde d'uranium et de combustibles d'oxyde mixte d'uranium et de plutonium.

### ÉTAT DE LA TECHNIQUE ANTÉRIEURE

Les usines de traitement de combustibles nucléaires usés utilisent à ce jour le procédé PUREX (pour **P**lutonium **U**ranium **R**efining by **EX**traction) pour récupérer l'uranium et le plutonium présents dans ces combustibles.

Ceci est obtenu par la mise en oeuvre de plusieurs cycles de purification par extraction liquide-liquide. L'extractant utilisé est le phosphate de tri-*n*-butyle qui présente une affinité particulière pour l'uranium et le plutonium.

Le procédé PUREX, tel qu'il est mis en oeuvre dans l'usine UP2-800 de La Hague en France, comprend schématiquement trois cycles, à savoir :
- un premier cycle qui vise à décontaminer conjointement l'uranium et le plutonium vis-à-vis de deux actinides(III), l'américium et le curium, ainsi que de la majeure partie des produits de fission, et à réaliser une partition de l'uranium et du plutonium en deux flux ; et
- deux cycles complémentaires, dénommés respectivement « *deuxième cycle uranium »* et « *deuxième cycle plutonium »* et qui visent à purifier séparément l'uranium et le plutonium après leur partition.

Récemment, une évolution importante du procédé PUREX, dénommée procédé COEX^{™} (pour **COEX**traction), a été proposée dans la demande internationale PCT publiée sous le numéro WO 2007/135178 [1].

En effet, cette évolution permet, tout en assurant une récupération et une purification de l'uranium et du plutonium comparables à celles obtenues dans le procédé PUREX, de réduire considérablement les risques d'un détournement du plutonium à des fins militaires.

Elle permet aussi de produire un flux contenant un mélange de plutonium, d'uranium et, éventuellement, de neptunium totalement décontaminés vis-à-vis des produits de fission et d'utiliser ce flux pour alimenter un atelier dit de « *co-conversion* » dont la fonction est de préparer, par co-précipitation oxalique, un oxyde mixte (U,Pu)O₂ ou (U,Pu,Np)O₂ directement utilisable pour la fabrication de combustibles nucléaires de type MOX (pour **M**ixed **OX**ide Fuel).

Pour ce faire, le procédé COEX^{™} prévoit, après des opérations de décontamination de l'uranium et du plutonium analogues à celles mises en oeuvre dans le premier cycle du procédé PUREX, de réaliser la partition de l'uranium et du plutonium de sorte à obtenir un premier flux contenant du plutonium, de l'uranium et, éventuellement, du neptunium, et un deuxième flux contenant de l'uranium et, éventuellement, du neptunium mais ne contenant pas de plutonium.

Il prévoit également de maintenir, dans toutes les opérations situées en aval de cette partition, le plutonium en présence d'uranium et, éventuellement, de neptunium jusqu'à l'obtention d'un oxyde mixte (U, Pu)O₂ ou (U, Pu, Np)O₂.

Ainsi, dans le procédé COEX^{™}, le « *deuxième cycle plutonium* » du procédé PUREX est remplacé par un cycle qui vise à purifier le plutonium et l'uranium et, le cas échéant, le neptunium présents dans le premier flux issu de la partition vis-à-vis des produits de fission susceptibles d'être encore présents dans ce flux.

Pour assurer un découplage entre le fonctionnement des ateliers chargés du traitement des combustibles nucléaires usés et celui des ateliers chargés de la fabrication des combustibles nucléaires MOX et éviter ainsi que la production des combustibles nucléaires MOX ne soit assujettie au traitement des combustibles nucléaires usés, le procédé COEX^{™} comprend une étape d'entreposage.

Cet entreposage se situe soit entre le cycle visant à purifier le plutonium et l'uranium et, le cas échéant, le neptunium présents dans le premier flux issu de la partition et la co-conversion, soit juste après la co-conversion.

Dans le premier cas, c'est un mélange de plutonium, d'uranium et, éventuellement, de neptunium purifiés en solution aqueuse qui est entreposé, tandis que, dans le second cas, c'est un mélange de plutonium, d'uranium et, éventuellement, de neptunium purifiés sous forme solide qui est entreposé.

Dans l'optique de rendre encore plus difficile un détournement du plutonium à des fins militaires au cours du traitement de combustibles nucléaires usés, les Inventeurs se sont fixé pour but de fournir un procédé qui, tout en présentant les mêmes avantages que le procédé COEX^{™}, à savoir :
- ne jamais laisser le plutonium seul,
- produire un flux contenant un mélange de plutonium, d'uranium et, éventuellement, de neptunium exempt de produits de fission, propre à être converti en un oxyde mixte (U,Pu)O₂ ou (U,Pu,Np)O₂ par co-précipitation oxalique, et
- assurer un découplage fonctionnel entre le traitement des combustibles nucléaires usés et la fabrication des combustibles nucléaires neufs, présente de plus l'avantage d'éviter que soit entreposé, sur le site où sont traités les combustibles nucléaires usés, du plutonium purifié, même mélangé à de l'uranium ou à de l'uranium et du neptunium.

Ils se sont aussi fixé pour but que le cumul de ces avantages conduise à un procédé dont l'exploitation industrielle ne soit pas plus complexe que celle du procédé COEX^{™} et permette même d'obtenir, dans la mesure du possible, un procédé plus simple à mettre en oeuvre industriellement que ce dernier.

### EXPOSÉ DE L'INVENTION

Ces buts et d'autres encore sont atteints par l'invention qui propose un procédé de traitement d'un combustible nucléaire usé, comprenant :
a) la décontamination de l'uranium, du plutonium et du neptunium présents dans une phase aqueuse nitrique, résultant de la dissolution de ce combustible nucléaire dans de l'acide nitrique, vis-à-vis des actinides(III) et de la majeure partie des produits de fission se trouvant également dans cette phase, cette décontamination comprenant au moins une opération de co-extraction de l'uranium à l'état d'oxydation VI, du plutonium à l'état d'oxydation IV, et du neptunium à l'état d'oxydation VI, dans une phase solvant, non miscible à l'eau et contenant au moins un extractant dans un diluant organique, et au moins une opération de lavage de la phase solvant obtenue à l'issue de cette opération de co-extraction, par une phase aqueuse nitrique ;
b) la partition de l'uranium, du plutonium et du neptunium présents dans la phase solvant obtenue à l'issue de l'étape a) en une première et une deuxième phase aqueuse, la première phase aqueuse contenant soit du plutonium sans uranium ni neptunium, soit un mélange de plutonium et d'uranium sans neptunium, soit encore un mélange de plutonium, d'uranium et de neptunium, et la deuxième phase aqueuse contenant soit un mélange d'uranium et de neptunium sans plutonium, soit de l'uranium sans plutonium ni neptunium ;
c) l'entreposage de la première phase aqueuse obtenue à l'issue de l'étape b) ;
d) la purification du plutonium ou du mélange de plutonium et d'uranium, ou encore du mélange de plutonium, d'uranium et de neptunium, présent dans la première phase aqueuse obtenue à l'issue de l'étape c) vis-à-vis des produits de fission se trouvant encore dans cette phase, cette purification comprenant au moins un ajout d'uranium pour obtenir, à l'issue de cette purification, une solution aqueuse contenant soit un mélange de plutonium et d'uranium, soit un mélange de plutonium, d'uranium et de neptunium ; et
e) la co-conversion du mélange de plutonium et d'uranium, ou du mélange de plutonium, d'uranium et de neptunium, présent dans la phase aqueuse obtenue à l'issue de l'étape d) en un oxyde mixte.

Ainsi, dans le procédé de l'invention :
- le plutonium n'est jamais laissé seul puisque, jusqu'à l'étape d) de purification, il est au moins associé à des produits de fission, voire à de l'uranium ou à un mélange d'uranium et de neptunium selon la manière dont est réalisée l'étape b) de partition, tandis qu'à partir de l'étape d) de purification, qui vise à le débarrasser totalement des produits de fission, il est au moins associé à de l'uranium, voire à un mélange d'uranium et de neptunium ;
- l'étape d) de purification permet de produire une solution aqueuse contenant un mélange de plutonium, d'uranium et, éventuellement, de neptunium exempt de produits de fission, propre à être converti en un oxyde mixte ;
- le découplage fonctionnel entre le traitement des combustibles nucléaires usés et la fabrication des combustibles nucléaires neufs est assuré par une étape d'entreposage mais qui se situe entre l'étape b) de partition et l'étape d) de purification de sorte que la phase aqueuse qui est entreposée contient du plutonium n'ayant pas encore été purifié vis-à-vis des produits de fission.

Le procédé de l'invention permet de la sorte d'éviter que soit présent, sur le site où est traité le combustible nucléaire usé, du plutonium purifié, même mélangé à de l'uranium ou à de l'uranium et du neptunium.

Dans un premier mode de mise en oeuvre préféré du procédé de l'invention, l'étape b) est réalisée de sorte que la première phase aqueuse contienne du plutonium mais sans uranium ni neptunium, et que la deuxième phase aqueuse contienne de l'uranium et du neptunium mais sans plutonium.

De ce fait, dans ce premier mode de mise en oeuvre, l'étape b) comprend de préférence :
b₁) une opération de désextraction du plutonium présent dans la phase solvant obtenue à l'issue de l'étape a), ce plutonium étant désextrait à l'état d'oxydation III au moyen d'une phase aqueuse nitrique contenant un agent réducteur permettant de réduire le plutonium(IV) en plutonium(III) et le neptunium(VI) en neptunium(IV) sans réduire l'uranium, par exemple du nitrate uraneux - ou uranium(IV) - stabilisé par un agent antinitreux, par exemple du nitrate d'hydrazinium ;
b₂) une opération de désextraction de l'uranium et du neptunium présents dans la phase solvant obtenue à l'issue de l'opération b₁), cette désextraction étant réalisée au moyen d'une phase aqueuse ; et
b₃) une opération de lavage de la phase aqueuse obtenue à l'issue de l'opération b₁) pour retirer de cette phase les fractions d'uranium et de neptunium ayant suivi le plutonium en phase aqueuse au cours de ladite opération b₁), ce lavage étant réalisé au moyen d'une phase solvant de même composition que celle utilisée à l'étape a).

Auquel cas, le plutonium étant plus stable en solution aqueuse à l'état oxydé qu'à l'état réduit, l'étape c) comprend de préférence :
c₁) une opération d'oxydation pour amener le plutonium(III) présent dans la phase aqueuse obtenue à l'issue de l'opération b₃) à l'état d'oxydation IV ;
c₂) une opération de concentration de la phase aqueuse obtenue à l'issue de l'opération d'oxydation pour réduire le volume de cette phase ; et
c₃) une opération d'entreposage de la phase aqueuse ainsi concentrée.

Auquel cas également, l'étape d) comprend de préférence :
d₁) une opération d'extraction du plutonium(IV) présent dans la phase aqueuse obtenue à l'issue de l'étape c), cette extraction étant réalisée au moyen d'une phase solvant de même composition que celle utilisée à l'étape a) ;
d₂) une opération de lavage de la phase solvant obtenue à l'issue de l'opération d₁) pour retirer de cette phase les produits de fission ayant suivi le plutonium en phase solvant au cours de ladite opération d₁), ce lavage étant réalisé au moyen d'une une phase aqueuse nitrique ;
d₃) une opération de désextraction du plutonium présent dans la phase solvant ainsi lavée, ce plutonium étant désextrait à l'état d'oxydation III au moyen d'une phase aqueuse nitrique contenant un agent réducteur permettant de réduire le plutonium(IV) en plutonium(III), par exemple du nitrate d'hydroxyl-ammonium stabilisé par du nitrate d'hydrazinium ; ainsi qu'au moins un ajout d'uranium(IV) au plutonium, cet ajout étant, de préférence, réalisé en fin d'opération d₃).

On obtient ainsi une phase aqueuse qui contient du plutonium(III) et de l'uranium(IV) mais qui ne contient plus de produits de fission et qui peut donc être soumise à l'étape e) de co-conversion pour l'obtention d'un oxyde mixte (U,Pu)O₂.

Dans un deuxième mode de mise en oeuvre préféré du procédé de l'invention, l'étape b) est réalisée de sorte que la première phase aqueuse contienne du plutonium et de l'uranium mais sans neptunium, et que la deuxième phase aqueuse contienne de l'uranium et du neptunium mais sans plutonium.

De ce fait, dans ce deuxième mode de mise en oeuvre, l'étape b) comprend de préférence :
b₁) une opération de désextraction du plutonium et d'une fraction de l'uranium présents dans la phase solvant obtenue à l'issue de l'étape a), ce plutonium et cet uranium étant désextraits respectivement à l'état d'oxydation III et VI au moyen d'une phase aqueuse nitrique contenant un agent réducteur permettant de réduire le plutonium(IV) en plutonium(III) et le neptunium(VI) en neptunium(IV) sans réduire l'uranium, par exemple de l'uranium(IV) stabilisé par du nitrate d'hydrazinium ;
b₂) une opération de désextraction de l'uranium et du neptunium présents dans la phase solvant obtenue à l'issue de l'opération b₁), cette désextraction étant réalisée au moyen d'une phase aqueuse ; et
b₃) une opération de lavage de la phase aqueuse obtenue à l'issue de l'opération b₁) pour retirer de cette phase la fraction de neptunium ayant suivi le plutonium et l'uranium en phase aqueuse au cours de ladite opération b₁), ce lavage étant réalisé au moyen d'une phase solvant de même composition que celle utilisée à l'étape a), et étant éventuellement complété par l'ajout d'uranium(IV) ou (VI) à ladite phase aqueuse pour compenser la fraction d'uranium susceptible de suivre le neptunium en phase solvant.

Auquel cas, l'étape c) comprend de préférence :
c₁) une opération d'oxydation pour amener le plutonium(III) présent dans la phase aqueuse obtenue à l'issue de l'opération b₃) à l'état d'oxydation IV et, si de l'uranium(IV) est présent dans cette phase, pour amener cet uranium(IV) à l'état d'oxydation VI, l'uranium étant, en effet, comme le plutonium plus stable en solution aqueuse à l'état oxydé qu'à l'état réduit ;
c₂) une opération de concentration de la phase aqueuse obtenue à l'issue de l'opération d'oxydation pour réduire le volume de cette phase ; et
c₃) une opération d'entreposage de la phase aqueuse ainsi concentrée.

Auquel cas également, l'étape d) comprend de préférence :
d₁) une opération de co-extraction du plutonium(IV) et de l'uranium(VI) présents dans la phase aqueuse obtenue à l'issue de l'étape c), cette co-extraction étant réalisée au moyen d'une phase solvant de même composition que celle utilisée à l'étape a) ;
d₂) une opération de lavage de la phase solvant obtenue à l'issue de l'opération d₁) pour retirer de cette phase les produits de fission ayant suivi le plutonium et l'uranium en phase solvant au cours de ladite opération d₁), ce lavage étant réalisé au moyen d'une phase aqueuse nitrique ;
d₃) une opération de désextraction du plutonium présent dans la phase solvant ainsi lavée, ce plutonium étant désextrait à l'état d'oxydation III au moyen d'une phase aqueuse nitrique contenant un agent réducteur permettant de réduire le plutonium(IV) en plutonium(III), par exemple du nitrate d'hydroxyl-ammonium stabilisé par du nitrate d'hydrazinium ; et
d₄) une opération de lavage de la phase aqueuse obtenue à l'issue de l'opération d₃) pour retirer de cette phase l'uranium(VI) ayant suivi le plutonium(III) en phase aqueuse au cours de ladite opération d₃), ce lavage étant réalisé au moyen d'une phase solvant de même composition que celle utilisée à l'étape a) et comprenant au moins un ajout d'uranium(IV) à ladite phase aqueuse, de préférence en fin d'opération d₄).

Là également, on obtient de la sorte une phase aqueuse qui contient du plutonium(III) et de l'uranium(IV) mais qui ne contient plus de produits de fission et qui peut donc être soumise à l'étape e) de co-conversion pour l'obtention d'un oxyde mixte (U, Pu)O₂.

Dans un troisième mode de mise en oeuvre du procédé de l'invention, l'étape b) est réalisée de sorte que la première phase aqueuse contienne à la fois du plutonium, de l'uranium et du neptunium, et que la deuxième phase aqueuse contienne de l'uranium mais sans plutonium ni neptunium.

De ce fait, dans ce troisième mode de mise en oeuvre, l'étape b) comprend de préférence :
b₁) une opération de désextraction du plutonium, du neptunium et d'une fraction de l'uranium présents dans la phase solvant obtenue à l'issue de l'étape a), ce plutonium, ce neptunium et cet uranium étant désextraits respectivement à l'état d'oxydation III, V et VI au moyen d'une phase aqueuse nitrique contenant un agent réducteur permettant de réduire le plutonium(IV) en plutonium(III) et le neptunium(VI) en neptunium(V) sans réduire l'uranium, par exemple du nitrate d'hydroxylammonium stabilisé par du nitrate d'hydrazinium ; et
b₂) une opération de désextraction de l'uranium présent dans la phase solvant obtenue à l'issue de l'opération b₁), cette désextraction étant réalisée au moyen d'une phase aqueuse.

Auquel cas, l'étape c) comprend de préférence :
c₁) une opération d'oxydation pour amener le plutonium(III) et le neptunium(V) présents dans la phase aqueuse obtenue à l'issue de l'opération b₂) respectivement à l'état d'oxydation IV et VI ;
c₂) une opération de concentration de la phase obtenue à l'issue de l'opération d'oxydation pour réduire le volume de cette phase ; et
c₃) une opération d'entreposage de la phase aqueuse ainsi concentrée.

Auquel cas également, l'étape d) comprend de préférence :
d₁) une opération de co-extraction du plutonium(IV), de l'uranium(VI) et du neptunium(VI) présents dans la phase aqueuse obtenue à l'issue de l'étape c), cette co-extraction étant réalisée au moyen d'une phase solvant de même composition que celle utilisée à l'étape a) ;
d₂) une opération de lavage de la phase solvant obtenue à l'issue de l'opération d₁) pour retirer de cette phase les produits de fission ayant suivi le plutonium, l'uranium et le neptunium en phase solvant au cours de ladite opération d₁), ce lavage étant réalisé au moyen d'une phase aqueuse nitrique ;
d₃) une opération de désextraction du plutonium et du neptunium présents dans la phase solvant ainsi lavée, ce plutonium et ce neptunium étant désextraits respectivement à l'état d'oxydation III et (V) au moyen d'une phase aqueuse nitrique contenant un agent réducteur permettant de réduire le plutonium(IV) en plutonium (III) et le neptunium (VI) en neptunium(V), par exemple du nitrate d'hydroxylammonium stabilisé par du nitrate d'hydrazinium ; et
d₄) une opération de lavage de la phase aqueuse obtenue à l'issue de l'opération d₃) pour retirer de cette phase l'uranium(VI) ayant suivi le plutonium(III) et le neptunium(V) en phase aqueuse au cours de ladite opération d₃), ce lavage étant réalisé au moyen d'une phase solvant de même composition que celle utilisée à l'étape a) et comprenant au moins un ajout d'uranium(IV) à ladite phase aqueuse, de préférence en fin d'opération d₄).

Comme l'ajout d'uranium(IV) se traduit par une réduction du neptunium(V) en neptunium(IV), on obtient ainsi une phase aqueuse qui contient du plutonium(III), de l'uranium(IV) et du neptunium(IV) mais qui ne contient plus de produits de fission et qui peut donc être soumise à l'étape e) de co-conversion pour l'obtention d'un oxyde mixte (U,Pu,Np)O₂.

Quel que soit le mode de mise en oeuvre du procédé de l'invention, l'étape e) est, de préférence, réalisée comme décrit dans la demande internationale PCT publiée sous le numéro WO 2005/119699 [2], c'est-à-dire :
* en stabilisant le plutonium à l'état d'oxydation III, l'uranium à l'état d'oxydation IV, et, le cas échéant, le neptunium à l'état d'oxydation IV, par un cation monochargé constitué uniquement d'atomes choisis parmi les atomes d'oxygène, de carbone, d'azote et d'hydrogène comme le cation hydrazinium ;
* en co-précipitant le plutonium, l'uranium et, le cas échéant, le neptunium ainsi stabilisés, par de l'acide oxalique ou par l'un de ses sels ou de ses dérivés ; et
* en calcinant le co-précipité résultant, de préférence sous un gaz inerte ou très légèrement oxydant, par exemple un gaz comprenant majoritairement de l'argon, pour éliminer le carbone et pour éviter la formation d'U₃O₈.

L'oxyde mixte ainsi obtenu, qui se présente sous la forme d'une poudre, peut alors être directement utilisé pour la fabrication de pastilles d'un combustible nucléaire MOX, par exemple par le procédé MIMAS (pour **MI**cronized **MAS**ter Blend).

En vue de son utilisation pour la fabrication de combustibles nucléaires MOX, cet oxyde mixte présente, de préférence, un rapport massique U/Pu égal ou sensiblement égal à 50/50 lorsqu'il ne contient pas de neptunium, et un rapport massique U/Pu/Np égal ou sensiblement égal à 49/49/2 lorsqu'il contient du neptunium.

Conformément à l'invention, il est possible d'ajuster, soit entre l'étape d) et l'étape e), soit au début de l'étape e), juste avant de stabiliser le plutonium, l'uranium et, le cas échéant, le neptunium, le rapport massique U/Pu ou U/Pu/Np de la phase aqueuse obtenue à l'issue de l'étape d) à celui de l'oxyde mixte que l'on souhaite obtenir.

Toutefois, on préfère que la phase aqueuse obtenue à l'issue de l'étape d) présente d'emblée un rapport massique U/Pu ou U/Pu/Np conforme à celui de cet oxyde mixte ou ne nécessitant qu'un très faible ajustement ultérieur.

Il en résulte que, dans les trois modes de mise en oeuvre préférés qui viennent d'être décrits, l'uranium(IV) qui est ajouté au plutonium au cours de l'étape d) l'est, de préférence, en une quantité telle que la phase aqueuse obtenue à l'issue de cette étape présente un rapport massique U/Pu ou U/Pu/Np conforme à celui de l'oxyde mixte obtenu à l'étape e).

Par ailleurs, quel que soit le mode de mise en oeuvre du procédé de l'invention, on préfère que la durée de l'étape c) soit au moins de quinze jours et, de préférence comprise entre un mois et douze mois, sachant que, dans cette étape, les opérations c₁) et c₂) ont des durées négligeables par rapport à la durée de l'opération c₃) d'entreposage.

On préfère, de plus, que la phase aqueuse entreposée au cours de l'opération c₃) ait une teneur en plutonium ou en mélange de plutonium et d'uranium ou encore en mélange de plutonium, d'uranium et de neptunium de 200 à 250 g/L.

Ainsi que l'homme du métier l'aura compris à la lecture de ce qui précède, l'extractant de la phase solvant que l'on utilise à l'étape a) et, partant, aux étapes b) et d) est, de préférence, choisi parmi les extractants qui complexent plus fortement les actinides se trouvant à l'état d'oxydation IV et/ou VI que les actinides se trouvant à l'état d'oxydation III et/ou V.

Cet extractant peut notamment être un phosphate de tri-alkyle comme le phosphate de tri-n-butyle (ou TBP), le phosphate de tri-isobutyle (ou TiBP) ou encore le phosphate de tri-isoamyle.

Le diluant organique dans lequel se trouve cet extractant peut, lui, être choisi parmi les différents hydrocarbures proposés pour les extractions liquide-liquide comme le toluène, le xylène, le t-butylbenzène, le tri-isopropylbenzène, le kérosène et les dodécanes, linéaires ou ramifiés, tels que le *n*-dodécane ou le tétrapropylène hydrogéné (ou TPH).

Toutefois, on préfère utiliser, comme dans le procédé PUREX, des phases solvants contenant du phosphate de tri-*n*-butyle dans un dodécane et ce, dans un rapport volumique égal ou sensiblement égal à 30/70.

Auquel cas, l'étape a) comprend de préférence :
- une première opération de co-extraction de l'uranium, du plutonium et du neptunium présents dans la phase aqueuse nitrique résultant de la dissolution du combustible nucléaire usé, cette co-extraction étant réalisée au moyen d'une phase solvant telle que définie ci-dessus ;
- une première opération de lavage de la phase solvant obtenue à l'issue de l'opération de co-extraction pour retirer de cette phase une partie des produits de fission, en particulier le ruthénium et le zirconium, ayant suivi l'uranium, le plutonium et le neptunium en phase solvant, ce lavage étant réalisé au moyen d'une phase aqueuse nitrique contenant, de préférence, de 1 à 3 moles/L d'acide nitrique ;
- une deuxième opération de lavage de la phase solvant obtenue à l'issue de l'opération de co-extraction pour retirer de cette phase le technétium ayant suivi l'uranium, le plutonium et le neptunium en phase solvant, ce lavage étant réalisé au moyen d'une phase aqueuse nitrique contenant, de préférence, de 3 à 5 moles/L d'acide nitrique ; et
- une opération de co-extraction de l'uranium, du plutonium et du neptunium présents dans la phase aqueuse obtenue à l'issue de la deuxième opération de lavage, cette co-extraction étant réalisée au moyen d'une phase solvant de même composition que celle utilisée pour la première opération de co-extraction.

Auquel cas également :
- la phase aqueuse nitrique utilisée pour les opérations b₁) contient, de préférence, de 0,05 à 1 mole/L d'acide nitrique, tandis que la phase aqueuse utilisée au cours des opérations b₂) contient, de préférence, de 0 à 0,05 mole/L d'acide nitrique ;
- la phase aqueuse nitrique utilisée pour les opérations d₂) contient, de préférence, de 1 à 3 moles/L d'acide nitrique, tandis que la phase aqueuse nitrique utilisée pour les opérations d₃) contient, de préférence, de 0,05 à 2 moles/L d'acide nitrique.

Le procédé de l'invention comprend encore des opérations de purification de l'uranium présent dans la deuxième phase aqueuse obtenue à l'issue de l'étape b) pour parfaire sa décontamination en produits de fission et, éventuellement, pour le séparer du neptunium si ladite étape b) est réalisée de sorte à ce que cette deuxième phase aqueuse contienne à la fois de l'uranium et du neptunium. Ces opérations peuvent être réalisées comme dans tout procédé PUREX conventionnel (voir, par exemple, l'article BN 3 650 du traité « Génie Nucléaire » des Techniques de l'Ingénieur, [3]).

D'autres avantages et caractéristiques du procédé de l'invention ressortiront de la lecture du complément de description qui suit et qui se réfère à des exemples de modes de mise en oeuvre à une échelle industrielle de ce procédé.

Bien entendu, ces exemples ne sont donnés qu'à titre d'illustrations de l'invention et n'en constituent en aucun cas une limitation.

### BRÈVE DESCRIPTION DES DESSINS

La figure 1 représente un schéma de principe d'un premier mode de mise en oeuvre du procédé de l'invention, conçu pour obtenir un oxyde mixte (U/Pu)O₂.
La figure 2 représente un schéma de principe d'un deuxième mode de mise en oeuvre du procédé de l'invention, également conçu pour obtenir un oxyde mixte (U/Pu)O₂.
La figure 3 représente un schéma de principe d'un troisième mode de mise en oeuvre du procédé de l'invention, conçu pour obtenir un oxyde mixte (U/Pu/Np)O₂.

Sur ces figures, les rectangles référencés 1 à 13 représentent des extracteurs multiétagés tels que ceux classiquement utilisés dans le traitement des combustibles nucléaires irradiés (mélangeurs-décanteurs, colonnes pulsées, extracteurs centrifuges).

Les phases solvants entrant et sortant de ces extracteurs sont symbolisées par des traits en pointillés, tandis que les phases aqueuses entrant et sortant de ces extracteurs sont symbolisées par des traits continus.

### EXPOSÉ DÉTAILLÉ DE MODES DE MISE EN OEUVRE PARTICULIERS

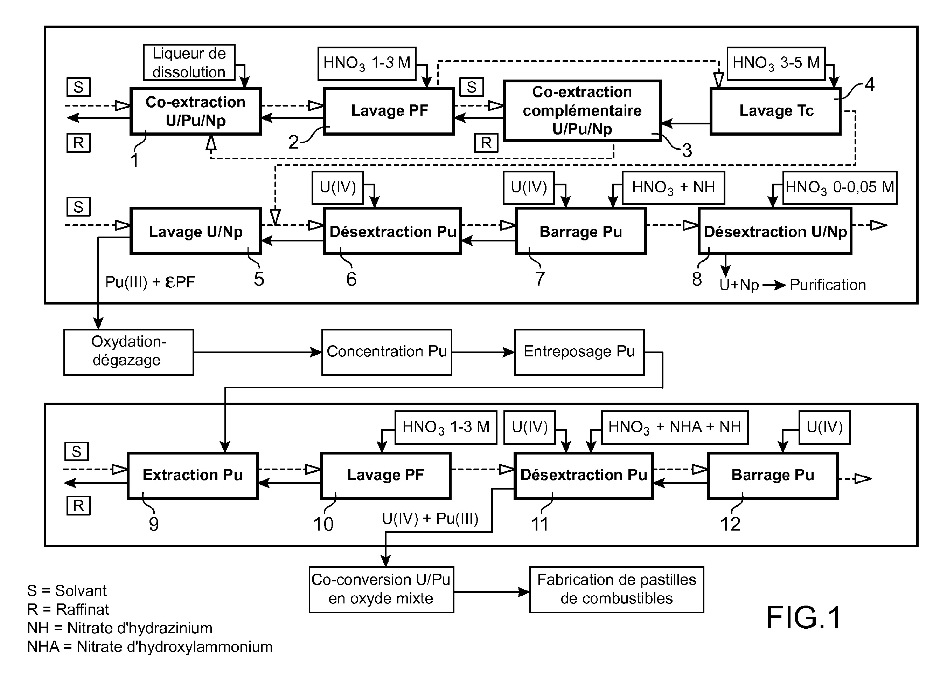

On se réfère tout d'abord à la figure 1 qui représente un schéma de principe d'un premier mode de mise en oeuvre du procédé de l'invention, conçu pour obtenir un oxyde mixte d'uranium et de plutonium, directement utilisable pour la fabrication d'un combustible nucléaire MOX, à partir d'une liqueur de dissolution préalablement obtenue par dissolution d'un combustible nucléaire usé, par exemple d'UO₂, dans de l'acide nitrique et clarification du mélange résultant.

Une telle liqueur de dissolution contient typiquement de 200 à 300 g/L d'uranium pour 2 à 3 g/L de plutonium. Elle contient également du neptunium, de l'américium, du curium et des produits de fission. Son acidité est généralement de l'ordre de 3 M.

Comme précédemment mentionné, le procédé selon l'invention a, pour première étape, une étape qui vise à décontaminer l'uranium, le plutonium et le neptunium vis-à-vis des actinides(III), c'est-à-dire l'américium et le curium, et vis-à-vis de la majeure partie des produits de fission.

Comme visible sur la figure 1, cette étape de décontamination comprend :
* une opération, dénommée « *co-extraction U*/*Pu*/*Np* », qui vise à extraire conjointement l'uranium, le plutonium et le neptunium, le premier à l'état d'oxydation VI, le second à l'état d'oxydation IV et le troisième à l'état d'oxydation VI, de la liqueur de dissolution, par mise en contact de cette liqueur avec une phase solvant contenant 30% (v/v) de TBP dans un dodécane, par exemple du TPH ;
* une opération, dénommée « *lavage PF »,* qui vise à retirer de la phase solvant les produits de fission, en particulier le ruthénium et le zirconium, ayant été extraits au cours de la « *co-extraction U*/*Pu*/*Np* », par mise en contact de la phase solvant issue de cette co-extraction avec une phase aqueuse nitrique d'acidité modérée, par exemple une solution d'acide nitrique 1 à 3 M ;
* une opération, dénommée « *lavage Tc »,* qui vise à retirer de la phase solvant le technétium ayant été extrait au cours de la « *co-extraction U*/*Pu*/*Np* », par mise en contact de la phase solvant issue du « *lavage PF »* avec une phase aqueuse nitrique d'acidité modérée mais plus élevée que celle de la phase aqueuse nitrique utilisée pour le « *lavage PF »,* par exemple une solution d'acide nitrique 3 à 5 M ; et
* une opération, dénommée « *co-extraction complémentaire U*/*Pu*/*Np* », qui vise à récupérer les fractions d'uranium, de plutonium et de neptunium ayant suivi le technétium en phase aqueuse au cours du *« lavage Tc* », par mise en contact de cette phase avec une phase solvant, également constituée de 30% (v/v) de TBP dans du TPH.

On obtient ainsi quatre phases :
- les deux phases aqueuses (ou raffinats) issues de la « *co-extraction U*/*Pu*/*Np »* et de la « *co-extraction complémentaire U*/*Pu*/*Np* », qui sont chargées en produits de fission et pour la première d'entre elles, en actinides(III), et qui sont éliminées du cycle ;
- la phase solvant issue de la *« co-extraction complémentaire U*/*Pu*/*Np* », qui est envoyée vers l'extracteur où se déroule la « *co-extraction U*/*Pu*/*Np »* pour être ajoutée à la phase solvant circulant dans cet extracteur ; et
- la phase solvant issue du « *lavage Tc »,* qui est chargée en U(VI), en Pu(IV) et en Np(VI).

Cette dernière phase solvant est dirigée vers une série d'extracteurs (5-8) dans lesquels est effectuée la deuxième étape du procédé, à savoir la partition de l'uranium, du plutonium et du neptunium en deux phases aqueuses.

Dans le présent mode de mise en oeuvre, cette partition est réalisée de la même façon que dans le procédé PUREX mis en oeuvre dans l'usine UP2-800 de La Hague.

Elle comprend donc :
■ une opération, dénommée « *désextraction Pu* », qui vise à désextraire le plutonium de la phase solvant issue du « *lavage Tc* », par mise en contact de cette phase avec une phase aqueuse nitrique de faible acidité, par exemple une solution d'acide nitrique 0,05 à 2 M, contenant un agent réducteur qui réduit le Pu(IV) en Pu(III) et le Np(VI) en Np(IV) (ce dernier étant extractible par le TBP) sans réduire l'uranium, ainsi qu'un agent antinitreux dont le rôle est de stabiliser l'agent réducteur, le Pu(III) et le Np(IV) par destruction de l'acide nitreux qui tend à se former ; cet agent réducteur est, par exemple, de l'uranium(IV) tandis que l'agent antinitreux est, par exemple, du nitrate d'hydrazinium ;
■ une opération, dénommée « *barrage Pu »,* qui vise à parfaire la désextraction du plutonium, par mise en contact de la phase solvant issue de la *« désextraction Pu »* avec une phase aqueuse nitrique de faible acidité, par exemple une solution d'acide nitrique 0,05 à 1 M, contenant le même agent réducteur et le même agent antinitreux que ceux utilisés pour la *« désextraction Pu » ;*
■ une opération, dénommée « *désextraction U*/*Np* », qui vise à désextraire de la phase solvant issue du « *barrage Pu »* l'uranium et le neptunium, par mise en contact de cette phase avec une phase aqueuse, par exemple une solution d'acide nitrique de molarité ne dépassant pas 0,05 M ; et
▪ une opération, dénommée « *lavage U*/*Np »,* qui vise à retirer de la phase aqueuse issue de la *« désextraction Pu »* les fractions d'uranium et de neptunium ayant suivi le plutonium au cours de la *« désextraction Pu* », par mise en contact de cette phase avec une phase solvant constituée de 30% (v/v) de TBP dans du TPH.

On obtient ainsi trois phases :
- la phase solvant issue de la *« désextraction U*/*Np* », qui ne contient plus ni uranium ni plutonium ni neptunium et qui est dirigée vers une série d'extracteurs (non représentés sur la figure 1) dans lesquels elle sera soumise à un traitement de purification (élimination des impuretés et produits de dégradation du TBP) en vue de son recyclage ;
- la phase aqueuse issue de la *« désextraction U*/*Np* », qui contient plus de 99,9% de l'uranium et de 70 à 80% du neptunium initialement présents dans la liqueur de dissolution et qui est dirigée vers une série d'extracteurs (non représentés sur la figure 1) dans lesquels l'uranium et le neptunium seront séparés l'un de l'autre et l'uranium sera purifié vis-à-vis des produits de fission ; et
- la phase aqueuse issue du « *lavage U*/*Np* », qui contient plus de 99% du plutonium initialement présent dans la liqueur de dissolution ainsi que des produits de fission à l'état de traces, la présence de ces traces étant toutefois suffisante pour rendre très compliquée une utilisation du plutonium à des fins militaires.

Cette dernière phase aqueuse est alors envoyée vers une unité où elle est successivement soumise à une opération d'oxydation permettant de ramener le plutonium(III) à l'état d'oxydation IV, à une opération de concentration destinée à réduire son volume et à une opération d'entreposage.

L'opération d'oxydation est, par exemple, réalisée en faisant circuler cette phase sous un courant d'oxydes d'azote NOₓ de manière à détruire l'agent antinitreux qu'elle contient - ce qui permet à l'acide nitreux de se reformer et de ré-oxyder le plutonium(III) en plutonium(IV) - et en éliminant ensuite l'excès d'acide nitreux par décomposition de cet acide en NO et NO₂ et dégazage des oxydes d'azote ainsi formés.

L'opération de concentration est, par exemple, réalisée par évaporation, de préférence jusqu'à l'obtention d'une phase aqueuse contenant de 200 à 250 g/L de plutonium.

Quant à l'opération d'entreposage, elle est, par exemple, réalisée en cuves à réseau de tubes, pendant une période d'au moins quinze jours et pouvant aller jusqu'à douze mois, ce qui permet d'assurer un découplage fonctionnel entre les ateliers chargés du traitement des combustibles nucléaires usés en charge des opérations situées en amont (cisaillage des crayons de combustible, dissolution des combustibles, clarification des solutions, décontamination et partition) et les ateliers en charge des opérations situées en aval (purification, co-conversion, fabrication du combustible MOX).

Au terme de cet entreposage, la phase aqueuse est dirigée vers une série d'extracteurs (9-12) dans lesquels est réalisée la quatrième étape du procédé, à savoir la purification du plutonium vis-à-vis des traces de produits de fission encore présents dans cette phase.

Cette purification comprend :
* une opération, dénommée « *extraction Pu* », qui vise à extraire le plutonium, à l'état d'oxydation IV, de la phase aqueuse issue de l'entreposage, par mise en contact de cette phase avec une phase solvant constituée de 30% (v/v) de TBP dans du TPH ;
* une opération, dénommée « *lavage PF »,* qui vise à retirer de la phase solvant issue de l'« *extraction Pu »* les produits de fission ayant été extraits au cours de cette extraction, par mise en contact de cette phase avec une phase aqueuse nitrique d'acidité modérée, par exemple une solution d'acide nitrique 1 à 3 M ; et
* une opération, dénommée « *désextraction Pu* », qui vise à désextraire le plutonium de la phase solvant issue du « *lavage PF* », par mise en contact de cette phase avec une phase aqueuse nitrique de faible acidité, par exemple une solution d'acide nitrique 0,05 à 2 M, contenant, un agent réducteur permettant de réduire le Pu(IV) en Pu(III), par exemple du nitrate d'hydroxylammonium (ou NHA), stabilisé par un agent antinitreux du type nitrate d'hydrazinium, et qui comprend l'ajout d'uranium(IV) à ladite phase aqueuse, de préférence juste avant qu'elle ne quitte l'extracteur 11, en une quantité telle qu'elle puisse présenter, à sa sortie de l'extracteur, un rapport massique U(IV)/Pu(III) conforme à celui de l'oxyde mixte (U,Pu)O₂ que l'on souhaite fabriquer, par exemple de 50/50 ou sensiblement égal à 50/50.

On obtient ainsi trois phases :
- la phase solvant issue du « *barrage Pu* », qui ne contient plus de plutonium et qui est envoyée vers la série d'extracteurs dévolus à la purification des phases solvants ;
- la phase aqueuse issue de l'« *extraction Pu* », qui contient des produits de fission et qui est éliminée du cycle ; et
- la phase aqueuse issue de la *« désextraction Pu* » qui contient un mélange d'uranium(IV) et de plutonium(III) et qui est directement envoyée vers un atelier où est réalisée la cinquième étape du procédé, à savoir la co-conversion de ce mélange en un oxyde mixte.

Comme précédemment mentionné, cette co-conversion est, de préférence, réalisée par le procédé décrit dans la référence **[2]** précitée, c'est-à-dire par co-précipitation, au moyen d'acide oxalique ou de l'un de ses sels ou de l'un de ses dérivés, de l'uranium(IV) et du plutonium(III), préalablement stabilisés par un cation monochargé constitué uniquement d'atomes choisis parmi les atomes d'oxygène, de carbone, d'azote et d'hydrogène, comme le cation hydrazinium, ou par un composé, tel qu'un sel, capable de former un tel cation, puis calcination du co-précipité résultant, de préférence sous un gaz inerte ou très légèrement oxydant, par exemple un gaz comprenant majoritairement de l'argon.

L'oxyde mixte (U/Pu)O₂ ainsi obtenu, qui se présente sous la forme d'une poudre, peut alors directement être utilisé pour la fabrication de pastilles d'un combustible nucléaire MOX, par exemple par un procédé de type MIMAS, auquel cas cette poudre est tamisée, mélangée à de l'oxyde d'uranium et éventuellement à des rebuts de fabrication de pastilles sous forme de chamotte, puis le mélange résultant est soumis à un pastillage, puis à un frittage.

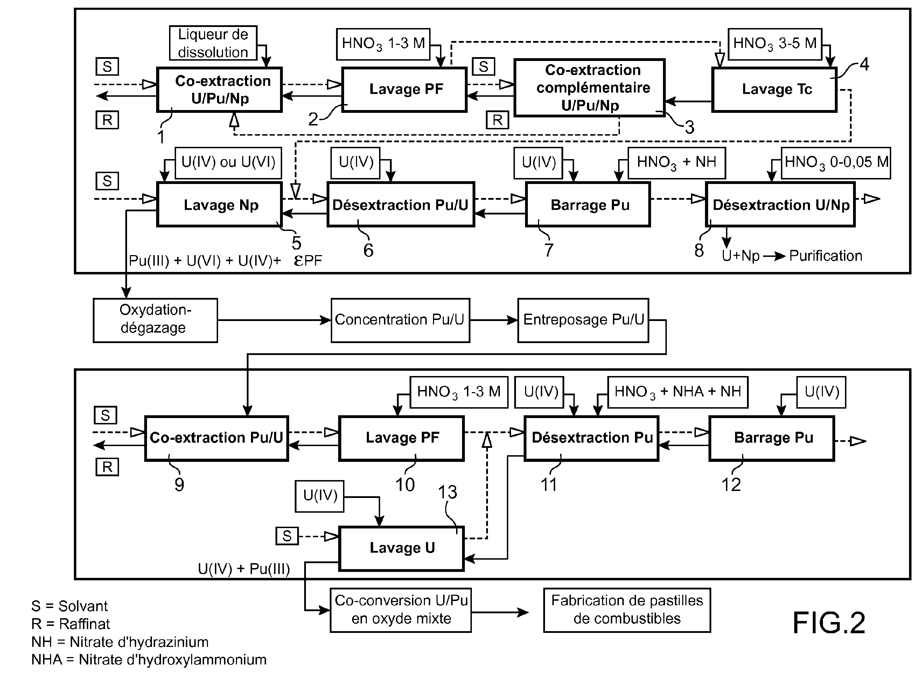

On se réfère à présent à la figure 2 qui représente un schéma de principe d'un deuxième mode de mise en oeuvre du procédé de l'invention, conçu comme le précédent pour obtenir un oxyde mixte d'uranium et de plutonium, directement utilisable pour la fabrication d'un combustible nucléaire MOX, à partir d'une liqueur de dissolution d'un combustible nucléaire usé, par exemple d'UO₂.

Dans ce deuxième mode de mise en oeuvre, la décontamination de l'uranium, du plutonium et du neptunium vis-à-vis des actinides(III) et de la majeure partie des produits de fission est réalisée comme dans le premier mode de mise en oeuvre précédemment décrit.

Par contre, la partition est réalisée comme dans le mode de mise en oeuvre du procédé COEX^{™} qui est illustré sur la figure 1 de la référence **[1].**

Aussi comprend-elle :
▪ une opération, dénommée « *désextraction Pu*/*U* », qui vise à désextraire le plutonium et une fraction de l'uranium de la phase solvant issue du *« lavage Tc* », par mise en contact de cette phase avec une phase aqueuse nitrique de faible acidité, par exemple une solution d'acide nitrique 0,05 à 2 M, contenant un agent réducteur qui réduit le Pu(IV) en Pu(III) et le Np(VI) en Np(IV) sans réduire l'uranium(VI), par exemple de l'uranium(IV) stabilisé par un agent antinitreux, par exemple du nitrate d'hydrazinium ;
▪ une opération, dénommée « *barrage Pu »,* qui vise à parfaire la désextraction du plutonium, par mise en contact de la phase solvant issue de la *« désextraction Pu*/*U »* avec une phase aqueuse nitrique de faible acidité, par exemple une solution d'acide nitrique 0,05 à 1 M, contenant le même agent réducteur et le même agent antinitreux que ceux utilisés pour la *« désextraction Pu*/*U » ;*
▪ une opération, dénommée « *désextraction U*/*Np* », qui vise à désextraire de la phase solvant issue du « *barrage Pu* » l'uranium et le neptunium présents dans cette phase, par mise en contact de ladite phase avec une phase aqueuse, par exemple une solution d'acide nitrique de molarité ne dépassant pas 0,05 M ; et
▪ une opération, dénommée « *lavage Np »,* qui vise à retirer de la phase aqueuse issue de la *« désextraction Pu*/*U »* la fraction de neptunium ayant suivi le plutonium et l'uranium au cours de cette désextraction, par mise en contact de cette phase avec une phase solvant contenant 30% (v/v) de TBP dans du TPH, et qui comprend l'ajout d'uranium(IV) ou d'uranium(VI) à ladite phase aqueuse, de préférence juste avant qu'elle ne quitte l'extracteur 11, pour compenser la fraction d'uranium susceptible d'avoir suivi le neptunium en phase solvant au cours de ce lavage.

On obtient ainsi trois phases :
- la phase solvant issue de la *« désextraction U*/*Np* », qui ne contient plus ni uranium ni plutonium ni neptunium et qui est dirigée vers une série d'extracteurs (non représentés sur la figure 1) dans lesquels elle sera soumise à un traitement de purification (élimination des impuretés et produits de dégradation du TBP) en vue de son recyclage ;
- la phase aqueuse issue de la *« désextraction U*/*Np* », qui contient de 99 à 99,9% de l'uranium et de 70 à 80% du neptunium initialement présents dans la liqueur de dissolution et qui est dirigée vers une série d'extracteurs (non représentés sur la figure 1) dans lesquels l'uranium et le neptunium seront séparés l'un de l'autre et l'uranium sera purifié vis-à-vis des produits de fission ; et
- la phase aqueuse issue du « *lavage Np »,* qui contient plus de 99% du plutonium initialement présent dans la liqueur de dissolution, de l'uranium (VI) et (IV) ainsi que des produits de fission à l'état de traces.

Cette dernière phase aqueuse est alors envoyée vers une unité où elle est successivement soumise à une opération d'oxydation permettant de ramener le plutonium(III) et l'uranium(IV) respectivement à l'état d'oxydation IV et VI, à une opération de concentration et à une opération d'entreposage, lesquelles sont, par exemple, réalisées comme précédemment décrit.

La phase aqueuse issue de l'entreposage est dirigée vers une série d'extracteurs (9-13) dans lesquels est réalisée l'étape de purification du plutonium et de l'uranium vis-à-vis des traces de produits de fission encore présents dans cette phase.

Comme visible sur la figure 2, cette purification comprend :
* une opération, dénommée « *co-extraction Pu*/*U* », qui vise à extraire le plutonium, à l'état d'oxydation IV, et l'uranium, à l'état d'oxydation VI, de la phase aqueuse issue de l'entreposage, par mise en contact de cette phase avec une phase solvant constituée de 30% (v/v) de TBP dans du TPH ;
* une opération, dénommée « *lavage PF »,* qui vise à retirer de la phase solvant issue de la *« co-extraction Pu*/*U »* les produits de fission ayant été extraits au cours de cette extraction et qui est réalisée comme dans le premier mode de mise en oeuvre précédemment décrit ;
* une opération, dénommée « *désextraction Pu* », qui vise à désextraire le plutonium de la phase solvant issue du « *lavage PF* », par mise en contact de cette phase avec une phase aqueuse nitrique de faible acidité, par exemple une solution d'acide nitrique 0,05 à 2 M, contenant, un agent réducteur permettant de réduire le Pu(IV) en Pu(III) sans réduire l'uranium, par exemple du NHA, stabilisé par un agent antinitreux du type nitrate d'hydrazinium ; et
* une opération, dénommée « *lavage U »,* qui vise à retirer de la phase aqueuse issue de la *« désextraction Pu* » l'uranium (VI) ayant suivi le plutonium(III) au cours de cette désextraction, par mise en contact de cette phase avec une phase solvant constituée de 30% (v/v) de TBP dans du TPH, et qui comprend l'ajout d'uranium (IV) à ladite phase aqueuse, de préférence juste avant qu'elle ne quitte l'extracteur 13, en une quantité telle qu'elle puisse présenter, à sa sortie de l'extracteur, un rapport massique U(IV)/Pu(III) conforme à celui de l'oxyde mixte (U/Pu)O₂ que l'on souhaite fabriquer, par exemple de 50/50 ou sensiblement égal à 50/50.

On obtient ainsi trois phases :
- la phase solvant issue du « *barrage Pu* », qui ne contient plus de plutonium et qui est envoyée vers la série d'extracteurs dévolus à la purification des phases solvants ;
- la phase aqueuse issue de la *« co-extraction Pu*/*U* », qui contient des produits de fission et qui est éliminée du cycle ; et
- la phase aqueuse issue de la *« désextraction Pu* », qui contient un mélange d'uranium(IV) et de plutonium(III) et qui est directement envoyée vers l'atelier en charge de l'étape de co-conversion pour l'obtention d'un oxyde mixte (U/Pu)O₂.

Là également, cette co-conversion est, de préférence, réalisée comme décrit dans la référence [2].

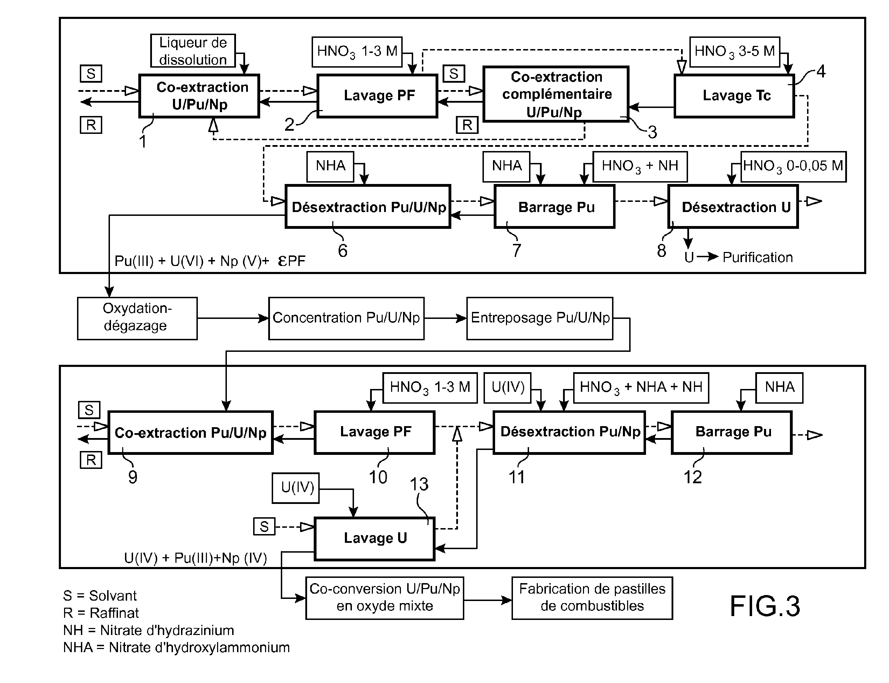

La figure 3 illustre schématiquement un troisième mode de mise en oeuvre du procédé de l'invention qui, contrairement aux deux précédents, est conçu pour obtenir un oxyde mixte d'uranium, de plutonium et de neptunium.

Ce mode de mise en oeuvre diffère du deuxième mode de mise en oeuvre précédemment décrit en ce que la partition est réalisée comme dans le mode de mise en oeuvre du procédé COEX^{™} qui est illustré sur la figure 5 de la référence **[1]** et en ce que la phase aqueuse qui est soumise aux étapes ultérieures d'entreposage, de purification et de co-conversion contient non seulement du plutonium et de l'uranium mais également du neptunium.

De ce fait et comme visible sur la figure 3, dans la partition :
▪ l'opération de « *désextraction Pu*/*U* » du deuxième mode de mise en oeuvre précédemment décrit est remplacée par une opération dénommée « *désextraction Pu*/*U*/*Np* », qui vise à désextraire le plutonium, le neptunium et une fraction de l'uranium de la phase solvant issue du « *lavage Tc* », par mise en contact de cette phase avec une phase aqueuse nitrique de faible acidité, par exemple une solution d'acide nitrique 0,05 à 2 M, contenant un agent réducteur qui réduit le Pu(IV) en Pu(III) et le Np(VI) en Np(V) (ce dernier étant très peu extractible par le TBP) sans réduire l'uranium(VI), par exemple du NHA stabilisé par un agent antinitreux, par exemple du nitrate d'hydrazinium ;
▪ l'opération « *lavage Np* » du deuxième mode de mise en oeuvre précédemment décrit est supprimée ; tandis que
▪ l'opération « *désextraction U*/*Np »* du deuxième mode de mise en oeuvre précédemment décrit est remplacée par une opération dénommée « *désextraction U* », qui vise à désextraire de la phase solvant l'uranium présent dans la phase solvant issue du *« barrage U »,* le neptunium ayant, lui, été totalement désextrait au cours de la « *désextraction Pu*/*U*/*Np* » et du « *barrage Pu* » et que l'on réalise de la même façon que ladite « *désextraction U*/*Np ».*

Ainsi, la phase aqueuse issue de la *« désextraction Pu*/*U*/*Np* » contient du plutonium(III), de l'uranium(VI), du neptunium(V) et des produits de fission à l'état de traces.

Cette phase est ensuite soumise aux opérations d'oxydation, de concentration et d'entreposage comme précédemment décrit puis dirigée vers une série d'extracteurs (9-13) dans lesquels est réalisée l'étape de purification.

Cette étape est réalisée de la même façon que l'étape de purification du deuxième mode de mise en oeuvre précédemment décrit à ceci près que, compte tenu que la phase aqueuse issue de l'entreposage contient du neptunium :
- l'opération « *co-extraction Pu*/*U* » du deuxième mode de mise en oeuvre précédemment décrit est remplacée par une opération dénommée « *co-extraction Pu*/*U*/*Np* », qui vise à extraire le plutonium, l'uranium et le neptunium présents dans ladite phase aqueuse mais que l'on réalise de la même façon que ladite opération *« co-extraction Pu*/*U » ;*
- l'opération « *désextraction Pu* » est remplacée par une opération dénommée « *désextraction Pu*/*Np* », qui vise à désextraire le plutonium, à l'état d'oxydation IV, et le neptunium, à l'état d'oxydation III, de la phase solvant issue du « *lavage PF* », par mise en contact de cette phase avec une phase aqueuse nitrique de faible acidité, par exemple une solution d'acide nitrique 0,05 à 2 M, contenant, un agent réducteur permettant de réduire le Pu(IV) en Pu(III) et le Np(VI) en Np(V) sans réduire l'uranium, par exemple du NHA, stabilisé par un agent antinitreux du type nitrate d'hydrazinium ; tandis que
- la quantité d'uranium(IV) qui est ajoutée au cours du « *lavage U »* (et qui a pour effet de réduire le Np(V) en Np(IV)) est réglée pour obtenir un rapport massique U(IV)/Pu(III)/Np(IV) conforme à celui de l'oxyde mixte (Pu,U,Np)O₂ que l'on souhaite fabriquer, par exemple de 49/49/2 ou sensiblement égal à 49/49/2.

Le procédé de l'invention ne se limite pas aux modes de mise en oeuvre qui viennent d'être expressément décrits.

Ainsi, par exemple, il est possible de supprimer l'opération « *barrage Pu* » prévue dans l'étape de purification des trois modes de mise en oeuvre précédemment décrits et de renvoyer la phase solvant issue de la « *désextraction Pu »* (dans le cas des premier et deuxième modes de mise en oeuvre) ou de la « *désextraction Pu*/*Np* » (dans le cas du troisième mode de mise en oeuvre) vers l'extracteur 6. Cette phase solvant est alors additionnée à la phase solvant entrant dans cet extracteur, ce qui permet de l'épuiser en plutonium.

### REFERENCES CITEES

**[1]** Demande internationale PCT WO 2007/135178
**[2]** Demande internationale PCT WO 2005/119699
**[3]** Article BN 3 650 du traité « Génie Nucléaire » des Techniques de l'Ingénieur

## Revendications

1. Procédé de traitement d'un combustible nucléaire usé, qui comprend :
a) la décontamination de l'uranium, du plutonium et du neptunium présents dans une phase aqueuse nitrique, résultant de la dissolution de ce combustible nucléaire dans de l'acide nitrique, vis-à-vis des actinides (III) et de la majeure partie des produits de fission se trouvant également dans cette phase, cette décontamination comprenant au moins une opération de co-extraction de l'uranium à l'état d'oxydation VI, du plutonium à l'état d'oxydation IV, et du neptunium à l'état d'oxydation VI, dans une phase solvant, non miscible à l'eau et contenant au moins un extractant dans un diluant organique, et au moins une opération de lavage de la phase solvant obtenue à l'issue de cette opération de co-extraction, avec une phase aqueuse nitrique ;
b) la partition de l'uranium, du plutonium et du neptunium présents dans la phase solvant obtenue à l'issue de l'étape a) en une première et une deuxième phase aqueuse, la première phase aqueuse contenant soit du plutonium sans uranium ni neptunium, soit un mélange de plutonium et d'uranium sans neptunium, soit encore un mélange de plutonium, d'uranium et de neptunium, et la deuxième phase aqueuse contenant soit un mélange d'uranium et de neptunium sans plutonium, soit de l'uranium sans plutonium ni neptunium ;
c) l'entreposage de la première phase aqueuse obtenue à l'issue de l'étape b) ;
d) la purification du plutonium ou du mélange de plutonium et d'uranium, ou encore du mélange de plutonium, d'uranium et de neptunium, présent dans la première phase aqueuse obtenue à l'issue de l'étape c) vis-à-vis des produits de fission se trouvant encore dans cette phase, cette purification comprenant au moins un ajout d'uranium pour obtenir, à l'issue de cette purification, une solution aqueuse contenant soit un mélange de plutonium et d'uranium, soit un mélange de plutonium, d'uranium et de neptunium ; et
e) la co-conversion du mélange de plutonium et d'uranium, ou du mélange de plutonium, d'uranium et de neptunium, présent dans la phase aqueuse obtenue à l'issue de l'étape d) en un oxyde mixte.

2. Procédé selon la revendication 1, dans lequel la première phase aqueuse obtenue à l'issue de l'étape b) contient du plutonium mais sans uranium ni neptunium, tandis que la deuxième phase aqueuse obtenue à l'issue de cette même étape contient de l'uranium et du neptunium mais sans plutonium.

3. Procédé selon la revendication 2, dans lequel l'étape b) comprend :
b₁) une opération de désextraction du plutonium présent dans la phase solvant obtenue à l'issue de l'étape a), ce plutonium étant désextrait à l'état d'oxydation III avec une phase aqueuse nitrique contenant un agent réducteur permettant de réduire le plutonium(IV) en plutonium(III) et le neptunium(VI) en neptunium(IV) sans réduire l'uranium ;
b₂) une opération de désextraction de l'uranium et du neptunium présents dans la phase solvant obtenue à l'issue de l'opération b₁), cette désextraction étant réalisée avec une phase aqueuse ; et
b₃) une opération de lavage de la phase aqueuse obtenue à l'issue de l'opération b₁) pour retirer de cette phase les fractions d'uranium et de neptunium ayant suivi le plutonium en phase aqueuse au cours de ladite opération b₁), ce lavage étant réalisé avec une phase solvant de même composition que celle utilisée à l'étape a).

4. Procédé selon la revendication 3, dans lequel l'étape c) comprend :
c₁) une opération d'oxydation pour amener le plutonium(III) présent dans la phase aqueuse obtenue à l'issue de l'opération b₃) à l'état d'oxydation IV ;
c₂) une opération de concentration de la phase aqueuse obtenue à l'issue de l'opération d'oxydation ; et
c₃) une opération d'entreposage de la phase aqueuse ainsi concentrée.

5. Procédé selon la revendication 4, dans lequel l'étape d) comprend :
d₁) une opération d'extraction du plutonium(IV) présent dans la phase aqueuse obtenue à l'issue de l'étape c), cette extraction étant réalisée avec une phase solvant de même composition que celle utilisée à l'étape a) ;
d₂) une opération de lavage de la phase solvant obtenue à l'issue de l'opération d₁) pour retirer de cette phase les produits de fission ayant suivi le plutonium en phase solvant au cours de ladite opération d₁), ce lavage étant réalisé avec une phase aqueuse nitrique ;
d₃) une opération de désextraction du plutonium présent dans la phase solvant ainsi lavée, ce plutonium étant désextrait à l'état d'oxydation III au moyen d'une phase aqueuse nitrique contenant un agent réducteur permettant de réduire le plutonium(IV) en plutonium(III) ;
ainsi que l'ajout d'uranium(IV) au plutonium, cet ajout étant, de préférence, réalisé en fin d'opération b₃).

6. Procédé selon la revendication 1, dans lequel la première phase aqueuse obtenue à l'issue de l'étape b) contient du plutonium et de l'uranium mais sans neptunium, tandis que la deuxième phase aqueuse obtenue à l'issue de cette même étape contient de l'uranium et du neptunium mais sans plutonium.

7. Procédé selon la revendication 6, dans lequel l'étape b) comprend :
b₁) une opération de désextraction du plutonium et d'une fraction de l'uranium présents dans la phase solvant obtenue à l'issue de l'étape a), ce plutonium et cet uranium étant désextraits respectivement à l'état d'oxydation III et VI au moyen d'une phase aqueuse nitrique contenant un agent réducteur permettant de réduire le plutonium(IV) en plutonium(III) et le neptunium(VI) en neptunium(IV) sans réduire l'uranium ;
b₂) une opération de désextraction de l'uranium et du neptunium présents dans la phase solvant obtenue à l'issue de l'opération b₁), cette désextraction étant réalisée au moyen d'une phase aqueuse ; et
b₃) une opération de lavage de la phase aqueuse obtenue à l'issue de l'opération b₁) pour retirer de cette phase la fraction de neptunium ayant suivi le plutonium et l'uranium en phase aqueuse au cours de ladite opération b₁), ce lavage étant réalisé au moyen d'une phase solvant de même composition que celle utilisée à l'étape a), et étant éventuellement complété par l'ajout d'uranium(IV) ou (VI) à ladite phase aqueuse pour compenser la fraction d'uranium susceptible de suivre le neptunium en phase solvant.

8. Procédé selon la revendication 7, dans lequel l'étape c) comprend :
c₁) une opération d'oxydation pour amener le plutonium(III) présent dans la phase aqueuse obtenue à l'issue de l'opération b₃) à l'état d'oxydation IV et, si de l'uranium(IV) est présent dans cette phase, pour amener cet uranium(IV) à l'état d'oxydation VI ;
c₂) une opération de concentration de la phase aqueuse obtenue à l'issue de l'opération d'oxydation ; et
c₃) une opération d'entreposage de la phase aqueuse ainsi concentrée.

9. Procédé selon la revendication 8, dans lequel l'étape d) comprend :
d₁) une opération de co-extraction du plutonium(IV) et de l'uranium(VI) présents dans la phase aqueuse obtenue à l'issue de l'étape c), cette co-extraction étant réalisée au moyen d'une phase solvant de même composition que celle utilisée à l'étape a) ;
d₂) une opération de lavage de la phase solvant obtenue à l'issue de l'opération d₁) pour retirer de cette phase les produits de fission ayant suivi le plutonium et l'uranium en phase solvant au cours de ladite opération d₁), ce lavage étant réalisé au moyen d'une phase aqueuse nitrique ;
d₃) une opération de désextraction du plutonium présent dans la phase solvant ainsi lavée, ce plutonium étant désextrait à l'état d'oxydation III au moyen d'une phase aqueuse nitrique contenant un agent réducteur permettant de réduire le plutonium(IV) en plutonium(III) ; et
d₄) une opération de lavage de la phase aqueuse obtenue à l'issue de l'opération d₃) pour retirer de cette phase l'uranium(VI) ayant suivi le plutonium(III) en phase aqueuse au cours de ladite opération d₃), ce lavage étant réalisé au moyen d'une phase solvant de même composition que celle utilisée à l'étape a) et comprenant au moins un ajout d'uranium(IV) à ladite phase aqueuse, de préférence en fin d'opération d₄).

10. Procédé selon la revendication 1, dans lequel la première phase aqueuse obtenue à l'issue de l'étape b) contient du plutonium, de l'uranium et du neptunium, tandis que la deuxième phase aqueuse obtenue à l'issue de cette même étape contient de l'uranium mais sans plutonium ni neptunium.

11. Procédé selon la revendication 10, dans lequel l'étape b) comprend :
b₁) une opération de désextraction du plutonium, du neptunium et d'une fraction de l'uranium présents dans la phase solvant obtenue à l'issue de l'étape a), ce plutonium, ce neptunium et cet uranium étant désextraits respectivement à l'état d'oxydation III, V et VI au moyen d'une phase aqueuse nitrique contenant un agent réducteur permettant de réduire le plutonium(IV) en plutonium(III) et le neptunium(VI) en neptunium(V) sans réduire l'uranium ; et
b₂) une opération de désextraction de l'uranium présent dans la phase solvant obtenue à l'issue de l'opération b₁), cette désextraction étant réalisée au moyen d'une phase aqueuse.

12. Procédé selon la revendication 11, dans lequel l'étape c) comprend :
c₁) une opération d'oxydation pour amener le plutonium(III) et le neptunium(V) présents dans la phase aqueuse obtenue à l'issue de l'opération b₂) respectivement à l'état d'oxydation IV et VI ;
c₂) une opération de concentration de la phase obtenue à l'issue de l'opération d'oxydation ; et
c₃) une opération d'entreposage de la phase aqueuse ainsi concentrée.

13. Procédé selon la revendication 12, dans lequel l'étape d) comprend :
d₁) une opération de co-extraction du plutonium(IV), de l'uranium(VI) et du neptunium(VI) présents dans la phase aqueuse obtenue à l'issue de l'étape c), cette co-extraction étant réalisée au moyen d'une phase solvant de même composition que celle utilisée à l'étape a) ;
d₂) une opération de lavage de la phase solvant obtenue à l'issue de l'opération de co-extraction pour retirer de cette phase les produits de fission ayant suivi le plutonium, l'uranium et le neptunium en phase solvant au cours de l'opération d₁), ce lavage étant réalisé au moyen d'une phase aqueuse nitrique ;
d₃) une opération de désextraction du plutonium et du neptunium présents dans la phase solvant ainsi lavée, ce plutonium et ce neptunium étant désextraits respectivement à l'état d'oxydation III et V au moyen d'une phase aqueuse nitrique contenant un agent réducteur permettant de réduire le plutonium(IV) en plutonium(III) et le neptunium(VI) en neptunium (V) ; et
d₄) une opération de lavage de la phase aqueuse obtenue à l'issue de l'opération d₃) pour retirer de cette phase l'uranium(VI) ayant suivi le plutonium(III) et le neptunium(V) en phase aqueuse au cours de ladite opération d₃), ce lavage étant réalisé au moyen d'une phase solvant de même composition que celle utilisée à l'étape a) et comprenant au moins un ajout d'uranium(IV) à ladite phase aqueuse, de préférence en fin d'opération d₄).

14. Procédé selon l'une quelconque des revendications 5, 9 ou 13, dans lequel l'uranium(IV) est ajouté au plutonium en une quantité telle que la phase aqueuse obtenue à l'issue de l'étape d) présente un rapport massique entre l'uranium et le plutonium conforme à celui de l'oxyde mixte obtenu à l'étape e).

15. Procédé selon l'une quelconque des revendications précédentes, dans lequel la durée de l'étape c) est d'au moins quinze jours, de préférence de un mois à douze mois.

16. Procédé selon l'une quelconque des revendications 4 à 14, dans lequel la phase aqueuse entreposée au cours de l'opération c₃) présente une teneur en plutonium ou en mélange de plutonium et d'uranium ou encore en mélange de plutonium, d'uranium et de neptunium de 200 à 250 g/L.

17. Procédé selon l'une quelconque des revendications précédentes, dans lequel la phase solvant utilisée à l'étape a) contient du phosphate de tri-n-butyle dans un dodécane, dans un rapport volumique égal à 30/70 ou sensiblement égal à 30/70.

18. Procédé selon l'une quelconque des revendications précédentes, dans lequel l'étape a) comprend :
- une première opération de co-extraction de l'uranium, du plutonium et du neptunium présents dans la phase aqueuse nitrique résultant de la dissolution du combustible nucléaire usé, cette co-extraction étant réalisée au moyen d'une phase solvant contient du phosphate de tri-n-butyle dans un dodécane, dans un rapport volumique égal à 30/70 ou sensiblement égal à 30/70 ;
- une première opération de lavage de la phase solvant obtenue à l'issue de l'opération de co-extraction pour retirer de cette phase une partie des produits de fission et, en particulier, le ruthénium et le zirconium, ayant suivi l'uranium, le plutonium et le neptunium en phase solvant, ce lavage étant réalisé au moyen d'une phase aqueuse nitrique contenant, de préférence, de 1 à 3 moles/L d'acide nitrique ;
- une deuxième opération de lavage de la phase solvant obtenue à l'issue de l'opération de co-extraction pour retirer de cette phase le technétium ayant suivi l'uranium, le plutonium et le neptunium en phase solvant, ce lavage étant réalisé au moyen d'une phase aqueuse nitrique contenant de 3 à 5 moles/L d'acide nitrique ; et
- une opération de co-extraction de l'uranium, du plutonium et du neptunium présents dans la phase aqueuse obtenue à l'issue de la deuxième opération de lavage, cette co-extraction étant réalisée au moyen d'une phase solvant de même composition que celle utilisée pour la première opération de co-extraction.

19. Procédé selon la revendication 18 dépendante de l'une quelconque des revendications 3, 7 et 11, dans lequel la phase aqueuse nitrique utilisée au cours de l'opération b₁) contient de 0,05 à 1 mole/L d'acide nitrique, tandis que la phase aqueuse nitrique utilisée au cours de l'opération b₂) contient de 0 à 0,05 mole/L d'acide nitrique.

20. Procédé selon la revendication 18 dépendante de l'une quelconque des revendications 5, 9 et 13, dans lequel la phase aqueuse nitrique utilisée au cours de l'opération d₂) contient de 1 à 3 moles/L d'acide nitrique, tandis que la phase aqueuse nitrique utilisée au cours de l'opération d₃) contient de 0,05 à 2 moles/L d'acide nitrique.

21. Procédé selon l'une quelconque des revendications précédentes, qui comprend de plus des opérations de purification de l'uranium présent dans la deuxième phase aqueuse obtenue à l'issue de l'étape b).

22. Procédé selon l'une quelconque des revendications précédentes, dans lequel le combustible nucléaire usé est un combustible d'oxyde d'uranium ou d'oxyde mixte d'uranium et de plutonium.

## Patentansprüche

1. Verfahren zur Behandlung eines gebrauchten Kernbrennstoffs, das umfasst:
a) die Dekontamination des Urans, des Plutoniums und des Neptuniums, die in einer wässrigen Salpetersäurephase vorhanden sind, resultierend aus der Auflösung dieses Kernbrennstoffs in Salpetersäure, hinsichtlich der Aktiniden (III) und des Großteils der Spaltprodukte, die sich ebenfalls in dieser Phase befinden, wobei diese Dekontamination wenigstens einen Arbeitsschritt der Koextraktion des Urans im Oxidationszustand VI, des Plutoniums im Oxidationszustand IV und des Neptuniums im Oxidationszustand VI in einer Lösungsphase umfasst, die nicht mit Wasser mischbar ist und wenigstens ein Extraktionsmittel in einem organischen Verdünner enthält, sowie wenigstens einen Arbeitsschritt des Waschens der am Ende dieses Arbeitsschritts der Koextraktion erhaltenen Lösungsphase mit einer wässrigen Salpetersäurephase;
b) die Trennung des Urans, des Plutoniums und des Neptuniums, die in der am Ende des Schritts a) erhaltenen Lösungsphase vorhanden sind, in eine erste und in eine zweite wässrige Phase, wobei die erste wässrige Phase entweder Plutonium ohne Uran und ohne Neptunium enthält, oder eine Mischung aus Plutonium und Uran ohne Neptunium, oder auch eine Mischung von Plutonium, Uran und Neptunium, und wobei die zweite wässrige Phase entweder eine Mischung von Uran und Neptunium ohne Plutonium oder Uran ohne Plutonium und ohne Neptunium enthält;
c) die Zwischenspeicherung der am Ende des Schritts b) erhaltenen ersten wässrigen Phase;
d) die Reinigung des Plutoniums oder der Mischung von Plutonium und Uran oder auch der Mischung von Plutonium, von Uran und von Neptunium, die in der am Ende des Schritts c) erhaltenen ersten wässrigen Phase enthalten sind, hinsichtlich der Spaltprodukte, die sich noch in dieser Phase befinden, wobei diese Reinigung wenigstens eine Hinzufügung von Uran umfasst, um am Ende dieser Reinigung eine wässrige Lösung zu erhalten, die entweder eine Mischung von Plutonium und Uran oder eine Mischung von Plutonium, von Uran und von Neptunium enthält; und
e) die Kokonversion der Mischung von Plutonium und von Uran oder der Mischung von Plutonium, von Uran und von Neptunium, die in der am Ende des Schritts d) erhaltenen wässrigen Phase vorhanden sind, in ein Mischoxid.

2. Verfahren nach Anspruch 1, bei dem die am Ende des Schritts b) erhaltene erste wässrige Phase Plutonium enthält, jedoch ohne Uran und ohne Neptunium, wohingegen die am Ende dieses gleichen Schritts erhaltene zweite wässrige Phase Uran und Neptunium enthält, aber ohne Plutonium.

3. Verfahren nach Anspruch 2, bei dem der Schritt b) umfasst:
b1) einen Arbeitsschritt der Desextraktion des Plutoniums, das in der am Ende des Schritts a) erhaltenen Lösungsphase vorhanden ist, wobei dieses Plutonium im Oxidationszustand III mit einer wässrigen Salpetersäurephase desextrahiert wird, die ein Reduktionsmittel enthält, das die Reduktion des Plutoniums (IV) in Plutonium (III) und des Neptuniums (VI) in Neptunium (IV) ermöglicht, ohne das Uran zu reduzieren;
b₂) einen Arbeitsschritt der Desextraktion des Urans und des Neptuniums, die in der am Ende des Schritts b₁) erhaltenen Lösungsphase vorhanden sind, wobei diese Desextraktion mit einer wässrigen Phase realisiert wird; und
b₃) einen Arbeitsschritt des Waschens der am Ende des Arbeitsschritts b₁) erhaltenen wässrigen Phase, um aus dieser Phase die Anteile von Uran und Neptunium zu entfernen, die im Verlauf des Arbeitsschritts b₁) auf das Plutonium in wässriger Phase folgen, wobei dieses Waschen mit einer Lösungsphase mit gleicher Zusammensetzung realisiert wird wie jene, die im Schritt a) verwendet wird.

4. Verfahren nach Anspruch 3, bei dem der Schritt c) umfasst:
c₁) einen Arbeitsschritt der Oxidation, um das Plutonium (III), das in der am Ende des Arbeitsschritts b₃) erhaltenen wässrigen Phase vorhanden ist, in den Oxidationszustand IV zu bringen;
c₂) einen Arbeitsschritt der Konzentration der am Ende des Arbeitsschritts der Oxidation erhaltenen wässrigen Phase; und
c₃) einen Arbeitsschritt der Zwischenspeicherung der derart konzentrierten wässrigen Phase.

5. Verfahren nach Anspruch 4, bei dem der Schritt d) umfasst:
d₁) einen Arbeitsschritt der Extraktion des Plutoniums (IV), das in der am Ende des Schritts c) erhaltenen wässrigen Phase vorhanden ist, wobei diese Extraktion mit einer Lösungsphase mit gleicher Zusammensetzung wie jene realisiert wird, die im Schritt a) verwendet wird;
d₂) einen Arbeitsschritt des Waschens der am Ende des Arbeitsschritts d₁) erhaltenen Lösungsphase, um aus dieser Phase die Spaltprodukte zu entfernen, die im Verlauf des Arbeitsschritts d₁) auf das Plutonium in der Lösungsphase folgen, wobei dieses Waschen mit einer wässrigen Salpetersäurephase realisiert wird;
d₃) einen Arbeitsschritt der Desextraktion des Plutoniums, das in der derart gewaschenen Lösungsphase vorhanden ist, wobei dieses Plutonium im Oxidationszustand III mittels einer wässrigen Salpetersäurephase desextrahiert wird, die ein Reduktionsmittel enthält, das die Reduktion von Plutonium (IV) zu Plutonium (III) ermöglicht;
sowie das Hinzufügen von Uran (IV) zum Plutonium, wobei dieses Hinzufügen vorzugsweise am Ende des Arbeitsschritts b₃) realisiert wird.

6. Verfahren nach Anspruch 1, bei dem die am Ende des Schritts b) erhaltene erste wässrige Phase Plutonium und Uran enthält, aber kein Neptunium, wohingegen die am Ende dieses gleichen Schritts erhaltene zweite wässrige Phase Uran und Neptunium enthält, aber kein Plutonium.

7. Verfahren nach Anspruch 6, bei dem der Schritt b) umfasst:
b₁) einen Arbeitsschritt der Desextraktion des Plutoniums und eines Anteils des Urans, die in der am Ende des Schritts a) erhaltenen Lösungsphase vorhanden sind, wobei dieses Plutonium und dieses Uran im Oxidationszustand III beziehungsweise VI mittels einer wässrigen Salpetersäurephase desextrahiert werden, die ein Reduktionsmittel enthält, welches die Reduktion von Plutonium (IV) zu Plutonium (III) und von Neptunium (VI) zu Neptunium (IV) ermöglicht, ohne das Uran zu reduzieren;
b₂) einen Arbeitsschritt der Desextraktion des Urans und des Neptuniums, die in der am Ende des Arbeitsschritts b₁) erhaltenen Lösungsphase vorhanden sind, wobei diese Desextraktion mittels einer wässrigen Phase realisiert wird; und
b₃) einen Arbeitsschritt des Waschens der am Ende des Arbeitsschritts b₁) erhaltenen wässrigen Phase, um aus dieser Phase den Anteil von Neptunium zu entfernen, der im Verlauf des Arbeitsschritts b₁) auf das Plutonium und das Uran in wässriger Phase folgt, wobei dieses Waschen mittels einer Lösungsphase mit gleicher Zusammensetzung wie jene realisiert wird, die im Schritt a) verwendet wird, und der eventuell vervollständigt wird durch das Hinzufügen von Uran (IV) oder (VI) zu der wässrigen Phase, um den Anteil von Uran zu kompensieren, der dem Neptunium in der Lösungsphase folgen kann.

8. Verfahren nach Anspruch 7, bei dem der Schritt c) umfasst:
c₁) einen Arbeitsschritt der Oxidation, um das Plutonium (III), das in der am Ende des Arbeitsschritts b₃) erhaltenen wässrigen Phase vorhanden ist, in den Oxidationszustand IV zu bringen und, falls Uran (IV) in dieser Phase vorhanden ist, dieses Uran (IV) in den Oxidationszustand VI zu bringen;
c₂) einen Arbeitsschritt der Konzentration der am Ende des Arbeitsschritts der Oxidation erhaltenen wässrigen Phase; und
c₃) einen Arbeitsschritt der Zwischenspeicherung der derart konzentrierten wässrigen Phase.

9. Verfahren nach Anspruch 8, bei dem der Schritt d) umfasst:
d₁) einen Arbeitsschritt der Koextraktion des Plutoniums (IV) und des Urans (VI), die in der am Ende des Schritts c) erhaltenen wässrigen Phase vorhanden sind, wobei diese Koextraktion mittels einer Lösungsphase mit der gleichen Zusammensetzung wie jene realisiert wird, die im Schritt a) verwendet wird;
d₂) einen Arbeitsschritt des Waschens der am Ende des Arbeitsschritts d₁) erhaltenen Lösungsphase, um aus dieser Phase die Spaltprodukte zu entfernen, die im Verlauf des Arbeitsschritts d₁) auf das Plutonium und das Uran in der Lösungsphase folgen, wobei dieses Waschen mittels einer wässrigen Salpetersäurephase realisiert wird;
d₃) einen Arbeitsschritt der Desextraktion des Plutoniums, das in der derart gewaschenen Lösungsphase vorhanden ist, wobei dieses Plutonium im Oxidationszustand III mittels einer wässrigen Salpetersäurephase desextrahiert wird, die ein Reduktionsmittel enthält, welches die Reduktion von Plutonium (IV) zu Plutonium (III) ermöglicht; und
d₄) einen Arbeitsschritt des Waschens der am Ende des Arbeitsschritts d₃) erhaltenen wässrigen Phase, um aus dieser Phase das Uran (VI) zu entfernen, das im Verlauf des Arbeitsschritts d₃) auf das Plutonium (III) in der wässrigen Phase folgt, wobei dieses Waschen mittels einer Lösungsphase mit der gleichen Zusammensetzung wie jene realisiert wird, die im Schritt a) verwendet wird, und umfassend wenigstens eine Hinzufügung von Uran (IV) zu der wässrigen Phase, vorzugsweise am Ende des Arbeitsschritts d₄).

10. Verfahren nach Anspruch 1, bei dem die am Ende des Schritts b) erhaltene erste wässrige Phase Plutonium, Uran und Neptunium enthält, wohingegen die am Ende dieses gleichen Schritts erhaltene zweite wässrige Phase Uran enthält, aber kein Plutonium und kein Neptunium.

11. Verfahren nach Anspruch 10, bei dem der Schritt b) umfasst:
b₁) einen Arbeitsschritt der Desextraktion des Plutoniums, des Neptuniums und eines Anteils des Urans, die in der am Ende des Schritts a) erhaltenen Lösungsphase vorhanden sind, wobei dieses Plutonium, dieses Neptunium und dieses Uran im Oxidationszustand III, V beziehungsweise VI mittels einer wässrigen Salpetersäurephase desextrahiert werden, die ein Reduktionsmittel enthält, welches die Reduktion von Plutonium (IV) zu Plutonium (III) und von Neptunium (VI) zu Neptunium (V) ermöglicht, ohne Uran zu reduzieren; und
b₂) einen Arbeitsschritt der Desextraktion des Urans, welches in der am Ende des Arbeitsschritts b₁) erhaltenen Lösungsphase vorhanden ist, wobei diese Desextraktion mittels einer wässrigen Phase realisiert wird.

12. Verfahren nach Anspruch 11, bei dem der Schritt c) umfasst:
c₁) einen Arbeitsschritt der Oxidation, um das Plutonium (III) und das Neptunium (V), die in der am Ende des Arbeitsschritts b₂) erhaltenen wässrigen Phase vorhanden sind, in den Oxidationszustand IV beziehungsweise VI zu bringen;
c₂) einen Arbeitsschritt der Konzentration der am Ende des Arbeitsschritts der Oxidation erhaltenen Phase; und
c₃) einen Arbeitsschritt der Zwischenspeicherung der derart konzentrierten wässrigen Phase.

13. Verfahren nach Anspruch 12, bei dem der Schritt d) umfasst:
d₁) einen Arbeitsschritt der Koextraktion des Plutoniums (IV), des Urans (VI) und des Neptuniums (VI), die in der am Ende des Schritts c) erhaltenen wässrigen Phase vorhanden sind, wobei diese Koextraktion mittels einer Lösungsphase mit der gleichen Zusammensetzung wie jene realisiert wird, die im Schritt a) verwendet wird;
d₂) einen Arbeitsschritt des Waschens der am Ende des Arbeitsschritts der Koextraktion erhaltenen Lösungsphase, um aus dieser Phase die Spaltprodukte zu entfernen, die im Verlauf des Arbeitsschritts d₁) auf das Plutonium, das Uran und das Neptunium in der Lösungsphase folgen; wobei dieses Waschen mittels einer wässrigen Salpetersäurephase realisiert wird;
d₃) einen Arbeitsschritt der Desextraktion des Plutoniums und des Neptuniums, die in der derart gewaschenen Lösungsphase vorhanden sind, wobei dieses Plutonium und dieses Neptunium im Oxidationszustand III beziehungsweise V mittels einer wässrigen Salpetersäurephase desextrahiert werden, die ein Reduktionsmittel enthält, welches die Reduktion von Plutonium (IV) zu Plutonium (III) und von Neptunium (VI) zu Neptunium (V) ermöglicht; und
d₄) einen Arbeitsschritt des Waschens der am Ende des Arbeitsschritts d₃) erhaltenen wässrigen Phase, um aus dieser Phase das Uran (VI) zu entfernen, das im Verlauf des Arbeitsschritts d₃) auf das Plutonium (III) und das Neptunium (V) in der wässrigen Phase folgt, wobei dieses Waschen mittels einer Lösungsphase mit der gleichen Zusammensetzung wie jene realisiert wird, die im Schritt a) verwendet wird, und umfassend wenigstens eine Hinzufügung von Uran (IV) zu der wässrigen Phase, vorzugsweise am Ende des Arbeitsschritts d₄).

14. Verfahren nach einem der Ansprüche 5, 9 oder 13, bei dem das Uran (IV) dem Plutonium in einer derartigen Menge hinzugefügt wird, dass die am Ende des Schritts d) erhaltene wässrige Phase ein Massenverhältnis zwischen Uran und Plutonium entsprechend jenem des im Schritt e) erhaltenen Mischoxids aufweist.

15. Verfahren nach einem der vorhergehenden Ansprüche, bei dem die Dauer des Schritts c) wenigstens 15 Tage beträgt, vorzugsweise von einem Monat bis 12 Monate.

16. Verfahren nach einem der Ansprüche 4 bis 14, bei dem die im Verlauf des Schritts c₃) zwischengespeicherte wässrige Phase einen Gehalt an Plutonium oder an der Mischung von Plutonium und von Uran oder auch an der Mischung von Plutonium, von Uran und von Neptunium zwischen 200 und 250 g/L aufweist.

17. Verfahren nach einem der vorhergehenden Ansprüche, bei dem die im Schritt a) verwendete Lösungsphase Tri-n-butyl-Phosphat in einem Dodekan in einem Volumenverhältnis gleich 30/70 oder im Wesentlichen gleich 30/70 enthält.

18. Verfahren nach einem der vorhergehenden Ansprüche, bei dem der Schritt a) umfasst:
- einen ersten Arbeitsschritt der Koextraktion des Urans, des Plutoniums und des Neptuniums, die in der wässrigen Salpetersäurephase enthalten sind, welche aus der Auflösung des gebrauchten Kernbrennstoffs resultiert, wobei diese Koextraktion mittels einer Lösungsphase realisiert wird, die Tri-n-butyl-Phosphat in einem Dodekan in einem Volumenverhältnis gleich 30/70 oder im Wesentlichen gleich 30/70 enthält;
- einen ersten Arbeitsschritt des Waschens der am Ende des Arbeitsschritts der Koextraktion erhaltenen Lösungsphase, um aus dieser Phase einen Teil der Spaltprodukte zu entfernen, und insbesondere das Ruthenium und das Zirkon, die auf das Uran, auf das Plutonium und das Neptunium in der Lösungsphase folgen, wobei dieses Waschen mittels einer wässrigen Salpetersäurephase realisiert wird, die vorzugsweise von 1 bis 3 mol/L Salpetersäure enthält;
- einen zweiten Arbeitsschritt des Waschens der am Ende des Arbeitsschritts der Koextraktion erhaltenen Lösungsphase, um aus dieser Phase das Technetium zu entfernen, das auf das Uran, das Plutonium und das Neptunium in der Lösungsphase folgt, wobei dieses Waschen mittels einer wässrigen Salpetersäurephase realisiert wird, die von 3 bis 5 mol/L Salpetersäure enthält; und
- einen Arbeitsschritt der Koextraktion von Uran, von Plutonium und von Neptunium, die in der am Ende des zweiten Arbeitsschritt des Waschens erhaltenen wässrigen Phase vorhanden sind, wobei diese Koextraktion mittels einer Lösungsphase mit der gleichen Zusammensetzung wie jene realisiert wird, die für den ersten Arbeitsschritt der Koextraktion verwendet wird.

19. Verfahren nach Anspruch 18 in Abhängigkeit von einem der Ansprüche 3, 7 und 11, bei dem die im Verlauf des Arbeitsschritts b₁) verwendete wässrige Salpetersäurephase von 0,05 bis 1 mol/L Salpetersäure enthält, wohingegen die im Verlauf des Arbeitsschritts b₂) verwendete wässrige Salpetersäurephase von 0 bis 0,05 mol/L Salpetersäure enthält.

20. Verfahren nach Anspruch 18 in Abhängigkeit von einem der Ansprüche 5, 9 und 13, bei dem die in Verlauf des Arbeitsschritts d₂) verwendete wässrige Salpetersäurephase von 1 bis 3 mol/L Salpetersäure enthält, wohingegen die im Verlauf des Arbeitsschritts d₃) verwendete wässrige Salpetersäurephase von 0,05 bis 2 mol/L Salpetersäure enthält.

21. Verfahren nach einem der vorhergehenden Ansprüche, das ferner Arbeitsschritte der Reinigung des Urans umfasst, welches in der zweiten wässrigen Phase vorhanden ist, die am Ende des Schritts b) erhalten wird.

22. Verfahren nach einem der vorhergehenden Ansprüche, bei dem der gebrauchte Kernbrennstoff ein Brennstoff aus Uranoxid oder aus Uran- und Plutonium-Mischoxid ist.

## Claims

1. Method for processing a used nuclear fuel, which comprises:
a) decontamination of the uranium, plutonium and neptunium present in a nitric aqueous phase resulting from the dissolution of this nuclear fuel in nitric acid, from actinides(III) and from the major portion of the fission products also present in this phase, this decontamination comprising at least one operation for co-extracting the uranium in the oxidation state VI, the plutonium in the oxidation state IV, and the neptunium in the oxidation state VI, in a solvent phase, non-miscible with water and containing at least one extractant in an organic diluant, and at least one operation for washing the solvent phase obtained at the end of this co-extraction operation, with a nitric aqueous phase;
b) partition of the uranium, plutonium and neptunium present in the solvent phase obtained at the end of step a) in a first and a second aqueous phase, the first aqueous phase either containing plutonium without uranium or neptunium, or a mixture of plutonium and uranium without any neptunium, or further a mixture of plutonium, uranium and neptunium, and the second aqueous phase either containing a mixture of uranium and of neptunium without any plutonium, or uranium without any plutonium or neptunium;
c) storage of the first aqueous phase obtained at the end of step b);
d) purification of the plutonium or of the mixture of plutonium and of uranium, or further of the mixture of plutonium, uranium and neptunium, present in the first aqueous phase obtained at the end of step c) with regard to the fission products still found in this phase, this purification comprising at least one addition of uranium in order to obtain at the end of this purification, an aqueous solution either containing a mixture of plutonium and uranium or a mixture of plutonium, uranium and neptunium; and
e) co-conversion of the mixture of plutonium and uranium, or of the mixture of plutonium, uranium and neptunium, present in the aqueous phase obtained at the end of step d), into a mixed oxide.

2. Method according to claim 1, wherein the first aqueous phase obtained at the end of step b) contains plutonium but without any uranium or neptunium, while the second aqueous phase obtained at the end of this same step contains uranium and neptunium but without any plutonium.

3. Method according to claim 2, wherein step b) comprises:
b₁) an operation for stripping the plutonium present in the solvent phase obtained at the end of step a), this plutonium being stripped in the oxidation state III with a nitric aqueous phase containing a reducing agent with which plutonium(IV) may be reduced into plutonium(III) and neptunium(VI) into neptunium(IV) without reducing the uranium.
b₂) an operation for stripping the uranium and the neptunium present in the solvent phase obtained at the end of operation b₁), this stripping being carried out with an aqueous phase; and
b₃) an operation for washing the aqueous phase obtained at the end of the operation b₁) in order to remove from this phase the uranium and neptunium fractions having followed the plutonium in the aqueous phase during said operation b₁), this washing being achieved with a solvent phase of the same composition as the one used in step a).

4. Method according to claim 3, wherein step c) comprises:
c₁) an oxidation operation for bringing the plutonium(III) present in the aqueous phase obtained at the end of the operation b₃) to the oxidation state IV;
c₂) an operation for concentrating the aqueous phase obtained at the end of the oxidation operation; and
c₃) an operation for storing the thereby concentrated aqueous phase.

5. Method according to claim 4, wherein step d) comprises:
d₁) an operation for extracting the plutonium(IV) present in the aqueous phase obtained at the end of step c), this extraction being achieved with a solvent phase of the same composition as the one used in step a);
d₂) an operation for washing the solvent phase obtained at the end of the operation d₁) in order to remove from this phase the fission products having followed the plutonium in the solvent phase during said operation d₁), this washing being achieved with a nitric aqueous phase;
d₃) an operation for stripping the plutonium present in the thereby washed solvent phase, this plutonium being stripping in the oxidation state III by means of a nitric aqueous phase containing a reducing agent with which plutonium(IV) may be reduced into plutonium(III);
as well as addition of uranium(IV) to the plutonium, this addition being preferably achieved at the end of operation b₃).

6. Method according to claim 1, wherein the first aqueous phase obtained at the end of step b) contains plutonium and uranium but without any neptunium, while the second aqueous phase obtained at the end of this same step contains uranium and neptunium but without any plutonium.

7. Method according to claim 6, wherein step b) comprises:
b₁) an operation for stripping the plutonium and a fraction of the uranium present in the solvent phase obtained at the end of step a), this plutonium and this uranium being stripped in the oxidation states III and VI, respectively, by means of a nitric aqueous phase containing a reducing agent with which plutonium(IV) may be reduced into plutonium(III) and neptunium(VI) into neptunium(IV) without reducing the uranium;
b₂) an operation for stripping the uranium and the neptunium present in the solvent phase obtained at the end of operation b₁), this stripping being achieved by means of an aqueous phase; and
b₃) an operation for washing the aqueous phase obtained at the end of the operation b₁) in order to remove from this phase the neptunium fraction having followed the plutonium and the uranium in the aqueous phase during said operation b₁), this washing being achieved by means of a solvent phase of the same composition as the one used in step a), and being optionally completed by addition of uranium(IV) or (VI) to said aqueous phase in order to compensate for the uranium fraction which may have followed the neptunium in the solvent phase.

8. Method according to claim 7, wherein step c) comprises:
c₁) an oxidation operation for bringing the plutonium(III) present in the aqueous phase obtained at the end of operation b₃) to the oxidation state IV and, if uranium(IV) is present in this phase, for bringing this uranium(IV) to the oxidation state VI;
c₂) an operation for concentrating the aqueous phase obtained at the end of the oxidation operation; and
c₃) an operation for storing the thereby concentrated aqueous phase.

9. Method according to claim 8, wherein step d) comprises:
d₁) an operation for co-extracting the plutonium(IV) and of the uranium(VI) present in the aqueous phase obtained at the end of step c), this co-extraction being achieved by means of a solvent phase with the same composition as the one used in step a);
d₂) an operation for washing the solvent phase obtained at the end of the operation d₁) in order to remove from this phase the fission products having followed the plutonium and the uranium in the solvent phase during said operation d₁), this washing being achieved by means of a nitric aqueous phase;
d₃) an operation for stripping the plutonium present in the thereby washed solvent phase, this plutonium being stripped in the oxidation state III by means of a nitric aqueous phase containing a reducing agent with which plutonium(IV) may be reduced into plutonium(III); and
d₄) an operation for washing the aqueous phase obtained at the end of the operation d₃) In order to remove from this phase the uranium(VI) having followed the plutonium(III) in the aqueous phase during said operation d₃), this washing being achieved by means of a solvent phase with the same composition as the one used in step a) and comprising at least one addition of uranium(IV) to said aqueous phase, preferably at the end of operation d₄).

10. Method according to claim 1, wherein the first aqueous phase obtained at the end of step b) contains plutonium, uranium and neptunium, while the second aqueous phase obtained at the end of this same step contains uranium but without any plutonium or neptunium.

11. Method according to claim 10, wherein step b) comprises:
b₁) an operation for stripping the plutonium, the neptunium and a fraction of the uranium present in the solvent phase obtained at the end of step a), this plutonium, this neptunium and this uranium being stripped in the oxidation states III, V and VI respectively by means of a nitric aqueous phase containing a reducing agent with which plutonium(IV) may be reduced into plutonium(III) and neptunium(VI) into neptunium(V) without reducing the uranium; and
b₂) an operation for stripping the uranium present in the solvent phase obtained at the end of the operation b₁), this stripping being achieved by means of an aqueous phase.

12. Method according to claim 11, wherein step c) comprises:
c₁) an oxidation operation in order to bring the plutonium(III) and the neptunium(V) present in the aqueous phase obtained at the end of the operation b₂) to the oxidation states IV and VI, respectively;
c₂) an operation for concentrating the phase obtained at the end of the oxidation operation; and
c₃) an operation for storing the thereby concentrated aqueous phase.

13. Method according to claim 12, wherein step d) comprises:
d₁) an operation for co-extracting the plutonium(IV), the uranium(VI) and the neptunium(VI) present in the aqueous phase obtained at the end of step c), this co-extraction being achieved by means of a solvent phase with the same composition as the one used in step a);
d₂) an operation for washing the solvent phase obtained at the end of the co-extraction operation in order to remove from this phase the fission products having followed the plutonium, the uranium and the neptunium in the solvent phase during operation d₁), this washing being achieved by means of a nitric aqueous phase;
d₃) an operation for stripping the plutonium and neptunium present in the thereby washed solvent phase, this plutonium and this neptunium being stripped in the oxidation states III and V, respectively, by means of a nitric aqueous phase containing a reducing agent, with which plutonium(IV) may be reduced into plutonium(III) and neptunium(VI) into neptunium(V); and
d₄) an operation for washing the aqueous phase obtained at the end of the operation d₃) In order to remove from this phase the uranium(VI) having followed the plutonium(III) and the neptunium(V) in the aqueous phase during said operation d₃), this washing being achieved by means of a solvent phase of the same composition as the one used in step a) and comprising at least one addition of uranium(IV) to said aqueous phase, preferably at the end of operation d₄).

14. Method according to any one of claims 5, 9 or 13, wherein the uranium(IV) is added to the plutonium in an amount such that the aqueous phase obtained at the end of step d) has a mass ratio between the uranium and the plutonium compliant with that of the mixed oxide obtained in step e).

15. Method according to any one of the preceding claims, wherein the duration of the step c) is of at least fifteen days, preferably from one month to twelve months.

16. Method according to any one of claims 4 to 14, wherein the aqueous phase stored during the operation c₃) has a content of plutonium, or of plutonium and uranium mixture, or further of plutonium, uranium and neptunium mixture, from 200 to 250 g/L.

17. Method according to any one of the preceding claims, wherein the solvent phase used in step a) contains tri-*n*-butyl phosphate in a dodecane, in a volume ratio equal to 30/70 or substantially equal to 30/70.

18. Method according to any one of the preceding claims, wherein step a) comprises:
- a first operation for co-extracting the uranium, the plutonium and the neptunium present in the nitric aqueous phase resulting from the dissolution of the used nuclear fuel, this co-extraction being achieved by means of a solvent phase containing tri-*n*-butyl phosphate in a dodecane, in a volume ratio equal to 30/70 or substantially equal to 30/70;
- a first operation for washing the solvent phase obtained at the end of the co-extraction operation in order to remove from this phase a portion of the fission products and, in particular, ruthenium and zirconium, having followed the uranium, plutonium and neptunium in the solvent phase, this washing being achieved by means of a nitric aqueous phase preferably containing from 1 to 3 mol/L of nitric acid;
- a second operation for washing the solvent phase obtained at the end of the co-extraction operation in order to remove from this phase technetium having followed the uranium, plutonium and neptunium in the solvent phase, this washing being achieved by means of a nitric aqueous phase containing from 3 to 5 mol/L of nitric acid; and
- an operation for co-extracting the uranium, plutonium and neptunium present in the aqueous phase obtained at the end of the second washing operation, this co-extraction being achieved by means of a solvent phase of the same composition as the one used for the first co-extraction operation.

19. Method according to claim 18 dependent on any one of claims 3, 7 and 11, wherein the nitric aqueous phase used during operation b₁) contains from 0.05 to 1 mol/L of nitric acid, while the nitric aqueous phase used during operation b₂) contains from 0 to 0.05 mol/L of nitric acid.

20. Method according to claim 18 dependent on any one of claims 5, 9 and 13, wherein the nitric aqueous phase used during operation d₂) contains from 1 to 3 mol/L of nitric acid, while the nitric aqueous phase used during operation d₃) contains from 0.05 to 2 mol/L of nitric acid.

21. Method according to any one of the preceding claims, which further comprises operations for purifying the uranium present in the second aqueous phase obtained at the end of step b).

22. Method according to any one of the preceding claims, wherein the used nuclear fuel is a uranium oxide fuel or a mixed uranium and plutonium oxide fuel.
